# EUROPEAN PATENT SPECIFICATION

(11) **EP 3 524 916 B1**
(45) Date of publication and mention of the grant of the patent: **12.08.2020**
(21) Application number: 16918266.4
(22) Date of filing: 04.10.2016
(51) Int. Cl.: F28F 13/12, F25B 1/00, F25B 39/02, B60K 11/08

(54) **VORTEX GENERATION DEVICE AND REFRIGERATION CYCLE APPARATUS**
WIRBELERZEUGUNGSVORRICHTUNG UND KÄLTEKREISLAUFVORRICHTUNG
DISPOSITIF DE GÉNÉRATION DE TOURBILLON ET APPAREIL À CYCLE DE RÉFRIGÉRATION

(43) Date of publication of application: 14.08.2019
(73) Proprietor: Mitsubishi Electric Corporation, Chiyoda-ku Tokyo 100-8310 (JP); The University Of Tokyo, Tokyo 113-8654 (JP)
(72) Inventor: MAEDA, Tsuyoshi, Tokyo 100-8310 (JP); ISHIBASHI, Akira, Tokyo 100-8310 (JP); HIGASHIIUE, Shinya, Tokyo 100-8310 (JP); ITO, Daisuke, Tokyo 100-8310 (JP); NAKAMURA, Shin, Tokyo 100-8310 (JP); AKAIWA, Ryota, Tokyo 100-8310 (JP); YATSUYANAGI, Akira, Tokyo 100-8310 (JP); KOMIYA, Yuta, Tokyo 100-8310 (JP); HIHARA, Eiji, Tokyo 113-8654 (JP); DANG, Chaobin, Tokyo 113-8654 (JP); LI, Jiyang, Tokyo 113-8654 (JP)
(74) Representative: Pfenning, Meinig & Partner mbB
(86) International application number: PCT/JP2016/079500
(87) International publication number: WO 2018/066067

(56) References cited:
- DE-A1-102008 030 449
- JP-A- S57 134 698
- JP-A- 2007 040 611
- JP-A- 2010 096 456
- JP-A- 2013 019 596
- JP-A- 2013 155 961
- JP-A- 2013 228 154
- JP-U- S5 556 366
- JP-U- S6 336 887
- JP-U- H02 115 688
- JP-U- S54 139 356
- JP-U- S58 165 570
- US-A- 4 403 648
- US-A1- 2008 289 794

## Description

### Technical Field

The present invention relates to a vortex generating device provided at, for example, a heat exchanger, and a refrigeration cycle apparatus including the vortex generating device. In particular, this invention relates to a vortex generating device as defined in the preamble of claim 1, and as illustrated in US 2008/289794.

### Background Art

For example, in a proposed heat exchange device, a metal mesh (vortex generating device) is provided at an air inlet of the heat exchanger to disturb the flow of air (see, for example, Patent Literature 1). When vortex flows are generated, they can be expected to improve the heat exchange performance of the heat exchanger.

### Citation List

### Patent Literature

Patent Literature 1: Japanese Unexamined Patent Application Publication No. 57-134698

### Summary of Invention

### Technical Problem

In a conventional vortex generating device, vortex flows are liable to break before air reaches a heat exchanger. Thus, the vortex flows cannot effectively be supplied to the heat exchanger.

The present invention has been made to solve the above problem, and an object of the invention is to provide a vortex generating device and a refrigeration cycle apparatus, which can more effectively generate vortex flows.

### Solution to Problem

A vortex generating device according to an embodiment of the present invention is a vortex generating device provided adjacent to a heat exchanger of a refrigeration cycle apparatus. The vortex generating device according to the invention is defined in claim 1.

### Advantageous Effects of Invention

By virtue of the above configuration, the vortex generating device according to the embodiment of the present invention can more effectively generate vortex flows.

### Brief Description of Drawings

[Fig. 1] Fig. 1 is a circuit diagram schematically illustrating an example of a refrigerant circuit configuration of a refrigeration cycle apparatus according to embodiment 1 of the present invention.
[Fig. 2] Fig. 2 is a perspective view illustrating an example of the configurations of a first heat exchanger and a vortex generating device provided in the refrigeration cycle apparatus according to embodiment 1 of the present invention.
[Fig. 3] Fig. 3 is a side view illustrating the example of the configurations of the first heat exchanger and the vortex generating device provided in the refrigeration cycle apparatus according to embodiment 1 of the present invention.
[Fig. 4] Fig. 4 is a passage cross section view illustrating an example of the configuration of passages of a flat tube in the first heat exchanger provided in the refrigeration cycle apparatus according to embodiment 1 of the present invention.
[Fig. 5A] Fig. 5A is a schematic for explaining the first heat exchanger provided in the refrigeration cycle apparatus according to embodiment 1 of the present invention.
[Fig. 5B] Fig. 5B is a perspective view of the first heat exchanger and the vortex generating device provided in the refrigeration cycle apparatus according to embodiment 1 of the present invention.
[Fig. 5C] Fig. 5C is a front view of the vortex generating device provided in the refrigeration cycle apparatus according to embodiment 1 of the present invention.
[Fig. 5D] Fig. 5D is a schematic for explaining a vane structure of the vortex generating device as illustrated in Fig. 5C.
[Fig. 5E] Fig. 5E is a schematic for explaining a vane body in the vane structure of the vortex generating device as illustrated in Fig. 5D.
[Fig. 5F] Fig. 5F is a schematic for explaining the dimensions of the first heat exchanger as illustrated in Fig. 5A, (a), and the dimensions of the flat tube as illustrated in Fig. 5A, (b).
[Fig. 5G] Fig. 5G is a schematic for explaining the dimensions of the vortex generating device as illustrated in Fig. 5C and the vane structure as illustrated in Fig. 5D, (b), and Fig. 5D, (c).
[Fig. 5H] Fig. 5H is a schematic for explaining modification 1 of the vortex generating device.
[Fig. 5I] Fig. 5I is a schematic for explaining modification 2 of the vortex generating device.
[Fig. 5J] Fig. 5J is a schematic for explaining modification 3 of the vortex generating device.
[Fig. 6] Fig. 6 is a side view illustrating an example of the configurations of a first heat exchanger and a vortex generating device provided in a refrigeration cycle apparatus according to embodiment 2 of the present invention.
[Fig. 7] Fig. 7 is a diagram schematically indicating the temperatures of the first heat exchanger and the vortex generating device in the case where the first heat exchanger provided in the refrigeration cycle apparatus according to embodiment 2 of the present invention is used as an evaporator.
[Fig. 8] Fig. 8 is a perspective view illustrating an example of the configurations of a first heat exchanger and a vortex generating device provided in a refrigeration cycle apparatus according to embodiment 3 of the present invention.
[Fig. 9] Fig. 9 is a side view illustrating the example of the configurations of the first heat exchanger and the vortex generating device provided in the refrigeration cycle apparatus according to embodiment 3 of the present invention.
[Fig. 10] Fig. 10 is a perspective view illustrating another example of the configurations of the first heat exchanger and the vortex generating device provided in the refrigeration cycle apparatus according to embodiment 3 of the present invention.
[Fig. 11] Fig. 11 is an exploded perspective view illustrating a further example of the configurations of the first heat exchanger and the vortex generating device provided in the refrigeration cycle apparatus according to embodiment 3 of the present invention.
[Fig. 12] Fig. 12 is a side view illustrating the further example of the configurations of the first heat exchanger and the vortex generating device provided in the refrigeration cycle apparatus according to embodiment 3 of the present invention.
[Fig. 13] Fig. 13 is a side view illustrating an example of the configuration of a refrigeration cycle apparatus according to embodiment 4 of the present invention.
[Fig. 14] Fig. 14 is a diagram additionally illustrating a velocity distribution of a flow of air moving into a vortex generating device in the refrigeration cycle apparatus illustrated in Fig. 13.
[Fig. 15] Fig. 15 is a side view illustrating another example of the configuration of the refrigeration cycle apparatus according to embodiment 4 of the present invention.
[Fig. 16] Fig. 16 is a plan view illustrating a further example of the configuration of the refrigeration cycle apparatus according to embodiment 4 of the present invention.
[Fig. 17] Fig. 17 is a side view illustrating the further example of the configuration of the refrigeration cycle apparatus according to embodiment 4 of the present invention as illustrated in Fig. 16.
[Fig. 18] Fig. 18 is a plan view illustrating a still another example of the configuration of the refrigeration cycle apparatus according to embodiment 4 of the present invention.
[Fig. 19] Fig. 19 is a side view illustrating the still other configuration of the refrigeration cycle apparatus according to embodiment 4 of the present invention as illustrated in Fig. 18.

### Description of embodiments

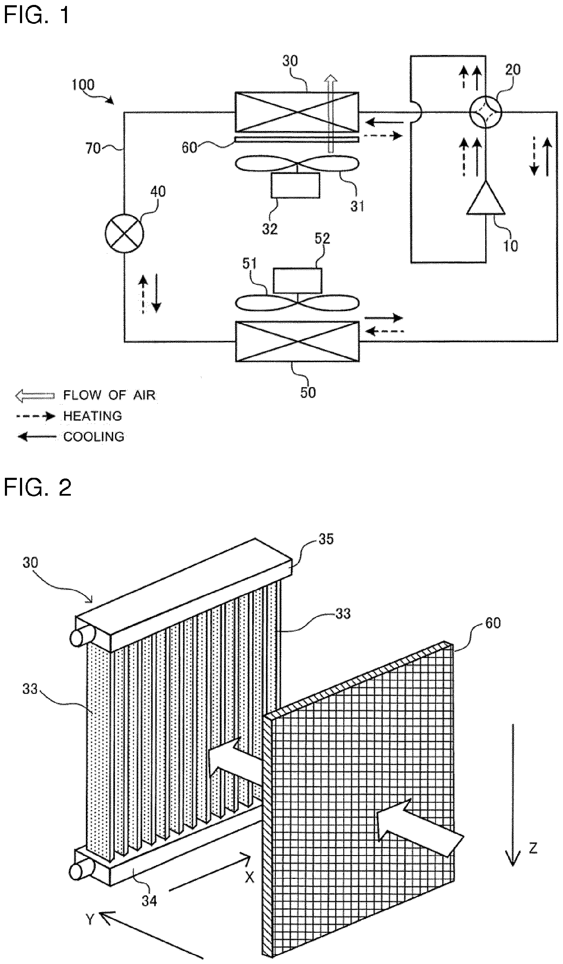

Embodiments 1 to 4 of the present invention will be described with reference to the accompanying drawings. It should be noted that in the drawings including Fig. 1 which will be referred to, the relationship in size between components may differ from an actual one. Also, in the drawings including Fig. 1, components which are the same as or similar to those previously illustrated are denoted by the same reference signs. The same is true of the entire text of the specification. Furthermore, the forms of components described in the entire text of the specification are merely examples, that is, they are not limited to those described in the text.

### Embodiment 1

Fig. 1 is a schematic circuit diagram illustrating an example of the refrigerant circuit configuration of a refrigeration cycle apparatus according to embodiment 1 of the present invention (which will be hereinafter referred to as refrigeration cycle apparatus 100). The refrigeration cycle apparatus 100 will be described with reference to Fig. 1. Referring to Fig. 1, an air-conditioning apparatus will be described as an example of the refrigeration cycle apparatus 100. Also, in Fig. 1, the flow of refrigerant during a heating operation is indicated by dashed arrows, the flow of refrigerant during a cooling operation is indicated by solid arrows, and the flow of air in a first heat exchanger 30 is indicated by an outlined arrow.

As illustrated in Fig. 1, the refrigeration cycle apparatus 100 includes a compressor 10, a flow switching device 20, the first heat exchanger 30, an expansion device 40, a second heat exchanger 50, a first fan 31, a second fan 51 and a vortex generating device 60. Furthermore, the compressor 10, the first heat exchanger 30, the expansion device 40 and the second heat exchanger 50 are connected by refrigerant pipes 70, whereby a refrigerant circuit is formed.

The compressor 10 compresses refrigerant which circulates in the refrigerant circuit, and discharges the refrigerant. The refrigerant compressed by the compressor 10 is discharged and sent to the first heat exchanger 30. As the compressor 10, for example, a rotary compressor, a scroll compressor, a screw compressor or a reciprocating compressor can be used.

During the heating operation, the first heat exchanger 30 functions as an evaporator, and during the cooling operation, the first heat exchanger 30 functions as a condenser. When functioning as the evaporator, the first heat exchanger 30 causes heat exchange to be performed between low-temperature and low-pressure refrigerant having flowed out of the expansion device 40 and air supplied by the first fan 31, as a result of which low-temperature and low-pressure liquid refrigerant or two-phase refrigerant is evaporated. When functioning as the condenser, the first heat exchanger 30 causes heat exchange to be performed between high-temperature and high-pressure refrigerant discharged from the compressor 10 and air supplied by the first fan 31, as a result of high-temperature and high-pressure gas refrigerant is condensed.

The first heat exchanger 30 includes heat transfer tubes (circular tubes or flat tubes) containing refrigerant passages through which refrigerant flows. It should be noted that the first heat exchanger 30 is not provided with fins which would be orthogonally connected to the heat transfer tubes. That is, the first heat exchanger 30 is a so-called fin-less heat exchanger.

It should be noted that the configuration of the first heat exchanger 30 will be described later in detail.

The expansion device 40 expands refrigerant having flowed out of the first heat exchanger 30 or the second heat exchanger 50 to reduce the pressure of the refrigerant. As the expansion device 40, for example, an electric expansion valve capable of adjusting the flow rate of refrigerant may be used. It should be noted that not only the electric expansion valve, but a mechanical expansion valve which employs a diaphragm as a pressure receiving portion or a capillary tube can be applied as the expansion device 40.

During the heating operation, the second heat exchanger 50 functions as the condenser, and during the cooling operation, the second heat exchanger 50 functions as the evaporator. When functioning as the condenser, the second heat exchanger 50 causes heat exchange to be performed between high-temperature and high-pressure refrigerant discharged from the compressor 10 and air supplied by the second fan 51, as a result of which high-temperature and high-pressure gas refrigerant is condensed. When functioning as the evaporator, the second heat exchanger 50 causes heat exchange to be performed between low-temperature and low-pressure refrigerant having flowed from the expansion device 40 and air supplied by the second fan 51, as a result of which low-temperature and low-pressure liquid refrigerant or two-phase refrigerant is evaporated.

As the second heat exchanger 50, a fin-less heat exchanger may be used as in the first heat exchanger 30, or another type of heat exchanger such as a fin-and-tube heat exchanger may be used. It suffices that the type of the second heat exchanger 50 is determined in accordance with targets to be subjected to heat exchange.

The flow switching device 20 is provided on a discharge side of the compressor 10, and switches the flow of refrigerant between the flow of refrigerant for the heating operation and that for the cooling operation. To be more specific, during the cooling operation, the flow switching device 20 performs switching to connect the compressor 10 to the first heat exchanger 30, and during the heating operation, the flow switching device 20 perform switching to connect the compressor 10 to the second heat exchanger 50. As the flow switching device 20, for example, a four-way valve may be used. However, a combination of two-way valves or three-way valves may be adopted as the flow switching device 20.

The first fan 31 is provided close to the first heat exchanger 30, and sends air to the first heat exchanger 30. The first fan 31 is rotated by a motor 32 for the first fan to send air to the first heat exchanger 30. As the fan 31, various types of fans such as a propeller fan, a cross-flow fan, a sirocco fan and a turbofan can be used.

In the case where the propeller fan or the cross-flow fan is used as the first fan 31, it is appropriate that the first fan 31 is provided downstream of the first heat exchanger 30.

In the case where the sirocco fan or the turbofan is used as the first fan 31, it is appropriate that the first fan 31 is provided upstream of the first heat exchanger 30.

The first fan 31 corresponds to "fan" of the present invention.

It should be noted that the position of the first fan 31 will be explained in detail in the description concerning embodiment 4.

The second fan 51 is provided close to the second heat exchanger 50, and sends air to the second heat exchanger 50. The second fan 51 is rotated by a motor 52 for the second fan to send air to the second heat exchanger 50. As the second fan 51, various types of fan such as a propeller fan, a cross-flow fan, a sirocco fan and a turbofan can be used.

In the case where the fin-less heat exchanger is used as the second heat exchanger 50, as in the first heat exchanger 30, and the propeller fan or the cross-flow fan is used as the second fan 51, it is appropriate that the second fan 51 is provided downstream of the second heat exchanger 50.

In the case where the fin-less heat exchanger is used as the second heat exchanger 50, as in the first heat exchanger 30, and the sirocco fan or the turbofan is used as the second fan 51, it is appropriate that the second fan 51 is provided as upstream of the second heat exchanger 50.

The vortex generating device 60 is provided on an upstream side in the flow of air in the first heat exchanger 30, and changes the flow of air from a laminar flow to a vortex flow (turbulent flow).

It should be noted that the configuration of the vortex generating device 60 will be described later in detail together with the first heat exchanger 30.

### <Operations of Refrigeration Cycle Apparatus 100>

Next, operations of the refrigeration cycle apparatus 100 will be described along with the flow of refrigerant. The operations of the refrigeration cycle apparatus 100 will be described by referring to by way of example the case where a fluid which is subjected to heat exchange is air, and a fluid which performs heat exchange is refrigerant, and where the first heat exchanger 30 is used as a heat source-side heat exchanger mounted on a heat source-side unit, and the second heat exchanger 50 is used as a use-side heat exchanger mounted on a use-side unit. That is, when the refrigeration cycle apparatus 100 starts the operation, air conditioned by the second heat exchanger 50 is supplied to a target space to be air-conditioned.

First of all, the cooling operation to be executed by the refrigeration cycle apparatus 100 will be described. It should be noted that the flow of refrigerant during the cooling operation is indicated by solid line arrows in Fig. 1.

As illustrated in Fig. 1, when the compressor 10 is driven, high-temperature and high-pressure gas refrigerant is discharged from the compressor 10. Then, the refrigerant flows as indicated by the solid line arrows. To be more specific, the high-temperature and high-pressure gas refrigerant discharged from the compressor 10 flows into the first heat exchanger 30, which functions as the condenser, via the flow switching device 20. The first heat exchanger 30 causes heat exchange to be performed between the high-temperature and high-pressure gas refrigerant having flowed into the first heat exchanger 30 and air supplied by the first fan 31, as a result of which the high-temperature and high-pressure gas refrigerant is condensed into high-pressure liquid refrigerant.

The high-pressure liquid refrigerant sent from the first heat exchanger 30 is changed into two-phase refrigerant including low-pressure gas refrigerant and liquid refrigerant by the expansion device 40. The two-phase refrigerant flows into the second heat exchanger 50 which functions as the evaporator. The second heat exchanger 50 causes heat exchange to be performed between the two-phase refrigerant having flowed into the second heat exchanger 50 and air supplied by the second fan 51, as a result of which liquid refrigerant included in the two-phase refrigerant is evaporated into low-pressure gas refrigerant. The low-pressure gas refrigerant sent from the second heat exchanger 50 flows into the compressor 10 via the flow switching device 20, and is compressed into high-temperature and high-pressure gas refrigerant. The high-temperature and high-pressure gas refrigerant is re-discharged from the compressor 10. Then, this cycle is repeated.

Next, the heating operation to be executed by the refrigeration cycle apparatus 100 will be described. It should be noted that the flow of refrigerant during the heating operation is indicated by dashed arrows in Fig. 1.

As illustrated in Fig. 1, when the compressor 10 is driven, high-temperature and high-pressure gas refrigerant is discharged from the compressor 10. Then, the refrigerant flows as indicated by the dashed arrows. To be more specific, the high-temperature and high-pressure gas refrigerant discharged from the compressor 10 flows into the second heat exchanger 50, which functions as the condenser, via the flow switching device 20. The second heat exchanger 50 causes heat exchange to be performed between the high-temperature and high-pressure gas refrigerant having flowed into the second heat exchanger 50 and air sent by the second fan 51, as a result of which the high-temperature and high-pressure gas refrigerant is condensed into high-pressure liquid refrigerant.

The high-pressure liquid refrigerant sent from the second heat exchanger 50 is changed into two-phase refrigerant including low-pressure gas refrigerant and liquid refrigerant by the expansion device 40. The two-phase refrigerant flows into the first heat exchanger 30 which functions as the evaporator. The first heat exchanger 30 causes heat exchange to be performed between the two-phase refrigerant having flowed into the first heat exchanger 30 and air sent by the first fan 31, as a result of which the liquid refrigerant included in the two-phase refrigerant is evaporated into low-pressure gas refrigerant. The low-pressure gas refrigerant sent from the first heat exchanger 30 flows into the compressor 10 via the flow switching device 20, and is compressed into high-temperature and high-pressure gas refrigerant. The high-temperature and high-pressure gas refrigerant is discharged from the compressor 10 again. Then, this cycle is repeated.

### <First Heat Exchanger 30 and Vortex Generating Device 60>

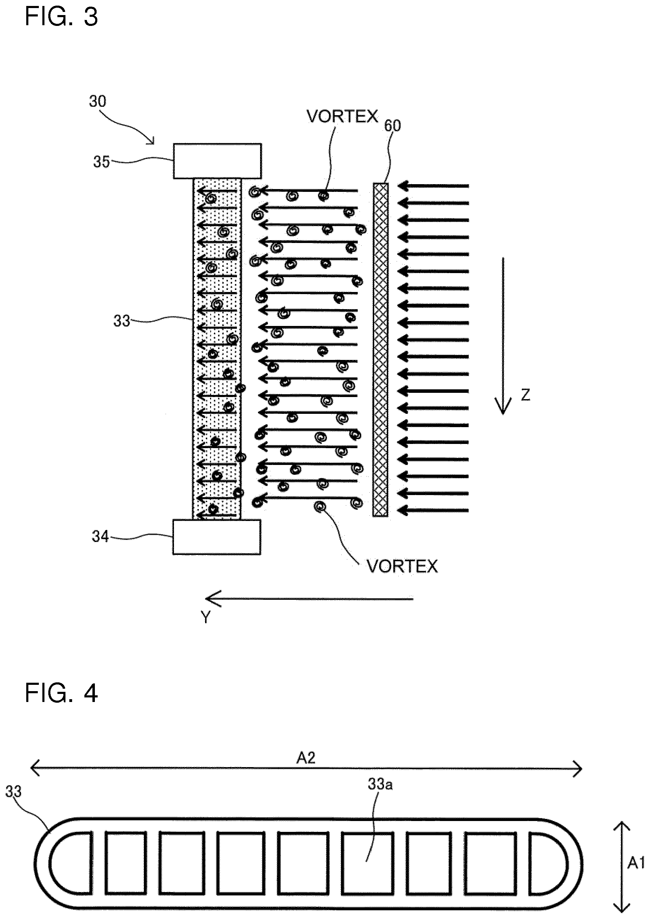

Fig. 2 is a perspective view illustrating an example of the configurations of the first heat exchanger 30 and the vortex generating device 60 provided in the refrigeration cycle apparatus 100. Fig. 3 is a side view illustrating the example of the configurations of the first heat exchanger 30 and the vortex generating device 60 provided in the refrigeration cycle apparatus 100. Fig. 4 is a sectional view illustrating an example of the configuration of flow passages of each of flat tubes 33 of the first heat exchanger 30 provided in the refrigeration cycle apparatus 100. The first heat exchanger 30 and the vortex generating device 60 provided in the refrigeration cycle apparatus 100 will be described in detail with reference to Figs. 2 to 4.

It should be noted that the flow of air is indicated by outlined arrows in Fig. 2 and by solid arrows in Fig. 3. Fig. 3 schematically illustrates generation of vortex flows in a region located downstream of the vortex generating device 60.

An arrow X in Fig. 2 indicates a direction in which the flat tubes 33 are arranged. The direction in which the flat tubes 33 are arranged will be hereinafter referred to as an X direction. An arrow Y in Figs. 2 and 3 indicates a flow direction of air. The flow direction of air will be hereinafter referred to as a Y direction. An arrow Z in Figs. 2 and 3 indicates a longitudinal direction of each flat tube 33. The longitudinal direction of each flat tube 33 will be hereinafter referred to as a Z direction. Also, in the drawings which will be referred to below, the X direction, the Y direction and the Z direction are the directions defined above.

Furthermore, the following description is made referring to by way of example the case where referring to Figs. 2 and 3, the X direction and the Y direction are orthogonal to the Z direction, the X direction is also orthogonal to the Y direction, and the first heat exchanger 30 is mounted on the refrigeration cycle apparatus 100 such that the X direction and the Y direction are parallel to a horizontal plane, and the Z direction is parallel to a gravity direction.

The first heat exchanger 30 includes a first header 34 containing a fluid passage through which fluid (for example, refrigerant) flows, a second header 35 containing a fluid passage through which the fluid flows, and the flat tubes 33 containing fluid passages. That is, the first heat exchanger 30 does not have fins as components.

It should be noted that the first header 34 and the second header 35 are provided in pairs, with the flat tubes 33 interposed between these headers. That is, as illustrated in Figs. 2 and 3, one of two ends of each of the flat tubes 33 (which is a lower end in the Z direction) is connected to the first header 34, and the other (an upper end in the Z direction) is connected to the second header 35.

The first header 34 is an elongated element extending in the X direction, and contains a fluid passage through which the fluid flows. To the first header 34, one of the ends of each flat tube 33 is connected. The first header 34 is used as an inflow-side header into which fluid supplied from, for example, the compressor 10 or the expansion device 40 flows. For example, the first header 34 is located parallel to the horizontal direction. It should be noted that the first header 34 may be used as an outflow-side header. In this case, the second header 35 is used as the inflow-side header.

The second header 35 is an elongated element extending in the X direction, and contains a fluid passage through which the fluid flows. To the second header 35, the other end of each flat tube 33 is connected. For example, fluid which has flowed through the first header 34 and the flat tubes 33 is supplied to the second header 35. The second header 35 is used as the outflow-side header. For example, the second header 35 is located parallel to the horizontal direction. It should be noted that the second header 35 may be used as the inflow-side header. In this case, the first header 34 is used as the outflow-side header.

The flat tubes 33 are arranged parallel to each other such that the fluid flows in the Z direction, and air sent from the first fan 31 passes through space between adjacent flat tubes 33. To be more specific, the flat tubes 33 extend in the gravity direction, and are arranged in parallel. That is, the first heat exchanger 30 is provided in a unit in which the flat tubes 33 are mounted such that the longitudinal direction of each flat tube 33 is parallel to the gravity direction.

Furthermore, as illustrated in Fig. 4, each flat tube 33 is a heat transfer tube which is elongated such that a horizontal length A2 is greater than a vertical height A1. Further, each flat tube 33 contains a plurality of fluid passages 33a through which the fluid flows, as illustrated in, for example, Fig. 4.

It should be noted that in the following description, a direction along the vertical height A1 is referred to as the direction of the minor axis of the cross section, and a direction along the horizontal length A2 is referred to as the direction of the major axis of the cross section.

The number of flat tubes 33 and the longitudinal length of each flat tube 33 are not particularly limited. It suffices that they are determined in accordance with, for example, the output of the refrigeration cycle apparatus 100 in which the first heat exchanger 30 is mounted or the purpose of use of the refrigeration cycle apparatus 100.

The flat tube 33 is made of, for example, aluminum or an aluminum alloy.

Furthermore, in the following description, it is assumed that the heat transfer tubes are the flat tubes 33. This, however, is an example. The first heat exchanger 30 may be made up of circular tubes (heat transfer tubes each having a circular cross section). In this case also, it is assumed that the circular tubes are disposed such that the fluid flows in the Z direction.

The vortex generating device 60 is configured such that air sent from the first fan 31 passes through the vortex generating device 60, and the flow of air which is a laminar flow before the flow of air passes through the vortex generating device 60 is changed to a vortex flow (turbulent flow) after the flow of air passes through the vortex generating device 60. That is, as illustrated in Fig. 3, a vortex flow is generated in the flow of air after the flow of air passes through the vortex generating device 60.

Furthermore, the vortex generating device 60 is made of resin or metal.

The flow of air in the first heat exchanger 30 will be described.

When the first fan 31 is rotated, air is sent therefrom to the first heat exchanger 30. The air passes through the vortex generating device 60 before flowing into the first heat exchanger 30. The vortex generating device 60 disturbs the flow of air which is a laminar flow, whereby the flow of air changes to a vortex flow. This flow of air, that is, the vortex flow, has a great advantage in terms of heat transfer and diffusion, and can thus improve the heat transfer performance of the first heat exchanger 30, as compared with the laminar flow. That is, the heat exchange at the first heat exchanger 30 can be promoted by vortexes.

Therefore, by providing the vortex generating device 60 upstream of the first heat exchanger 30, the flow of air is changed to a vortex flow on a windward side of the first heat exchanger 30, and the heat exchange between the air and the flat tubes 33 of the first heat exchanger 30 is promoted, thus improving the heat exchange performance.

It should be noted that the first heat exchanger 30 and the vortex generating device 60 may be provided as a single unit, and provided in, for example, the heat source-side unit (outdoor unit) of the refrigeration cycle apparatus 100. Alternatively, the first heat exchanger 30 and the vortex generating device 60 may be provided as separate components.

### <Another Example of Configuration of Vortex Generating Device 60>

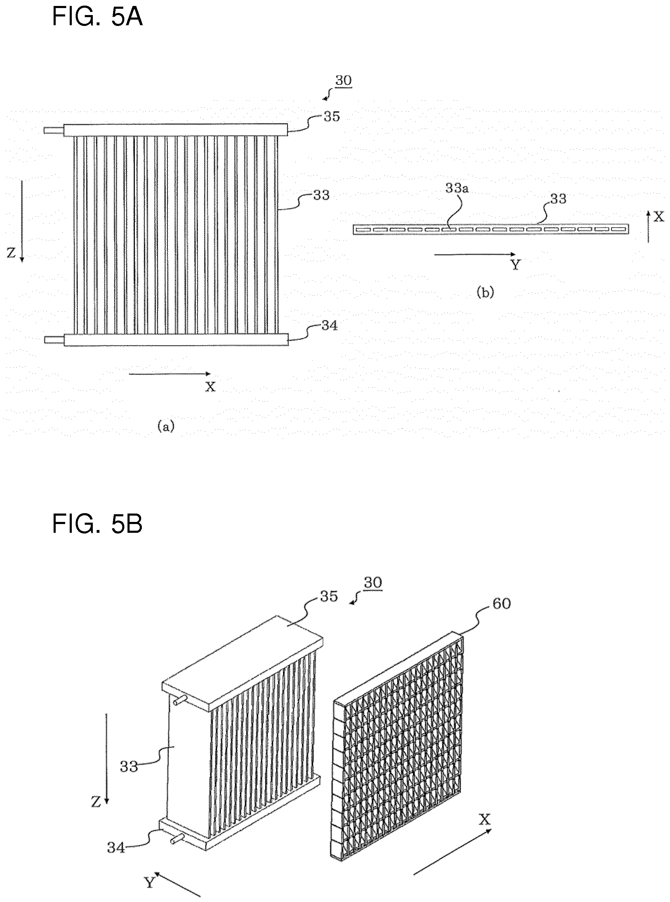

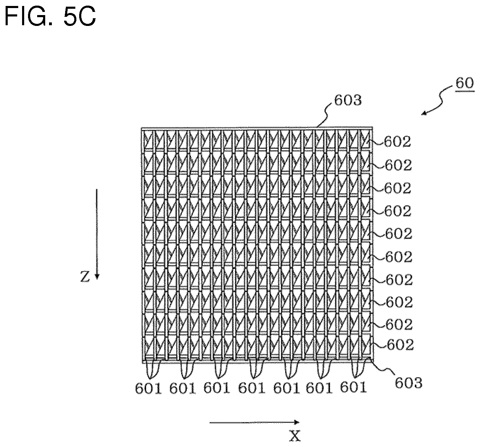

Fig. 5A is a diagram for explaining the first heat exchanger 30 provided in the refrigeration cycle apparatus 100 according to embodiment 1. Fig. 5B is a perspective view of the first heat exchanger 30 and the vortex generating device 60 provided in the refrigeration cycle apparatus 100 according to embodiment 1. Fig. 5C is a front view of the vortex generating device 60 provided in the refrigeration cycle apparatus 100 according to embodiment 1.

The vortex generating device 60 is provided to face, for example, the first heat exchanger. The vortex generating device 60 includes a plurality of vane bodies 602, first support bodies 601 to which the vane bodies 602 are fixed, and second support bodies 603 located to intersect the first support bodies 601. The first support bodies 601 are located parallel to the Z direction. The first support bodies 601 are arranged in the X direction and separated from each other by space where the vane bodies 602 are provided. The first support bodies 601 are plate-shaped elements. The vane bodies 602 are fixed to the first support bodies 601 and arranged in the Z direction. For example, referring to Fig. 5C, ten vane bodies 602 are fixed to the rightmost one of the first support bodies 601 and arranged in the Z direction. It should be noted that the vortex generating device 60 may be configured such that vane bodies 602 are fixed to respective first support bodies 601. If this is applied to the first support bodies 601 as illustrated in Fig. 5C, each of the first support bodies 601 parallel to the Z direction is divided into ten pieces. As a result, in the vortex generating device as illustrated in Fig. 5C in which twenty-one first support bodies 601 are arranged in the X direction, each of the twenty-one first support bodies 601 is divided into ten, as a result of which two hundred ten (10 × 21) support bodies are provided. It should be noted that the above division number is not limited to 10, that is, it may be set as appropriate. For example, the division number may be set to 2 in order that five vane bodies 602 be fixed to each first support body 601.

The vortex generating device 60 includes two second support bodies 603. The second support bodies 603 are located parallel to the X direction. One of the second support bodies 603 is fixed to upper ends of the first support bodies 601, and the other is fixed to lower ends of the first support bodies 601. The second support bodies 603 are plate-shaped elements. The second support bodies 603 support the plurality of first support bodies 601 to maintain the shape of the vortex generating device 60.

In embodiment 1, each of the plurality of flat tubes 33 of the first heat exchanger 30 located to face the vortex generating device 60 is linearly shaped. The plurality of flat tubes 33 are arranged in a predetermined arrangement direction. The arrangement direction is a direction parallel to the X direction. It should be noted that the vane bodies 602 are arranged in an axial direction of each of the flat tubes 33 and also in the arrangement direction of the flat tubes 33. The axial direction is a direction parallel to the Z direction. Since the vane bodies 602 are arranged in the above manner, vortex flows evenly flow into the space between the flat tubes 33, the heat exchange performance can be improved. Referring to Fig. 5C, in each of columns, ten vane bodies 602 are disposed in the axial direction of each flat tube 33, and in each of rows, twenty vane bodies 602 are disposed in the arrangement direction of the flat tubes 33. Therefore, the vortex generating device 60 includes two hundred (10 × 20) vane bodies 602.

### <Regarding Vane Structure 600>

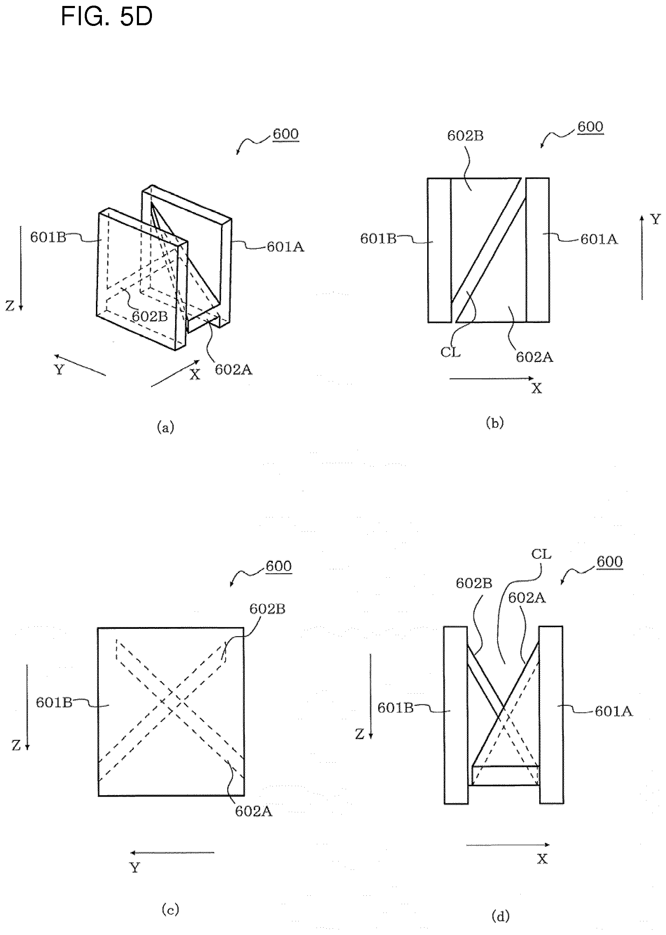

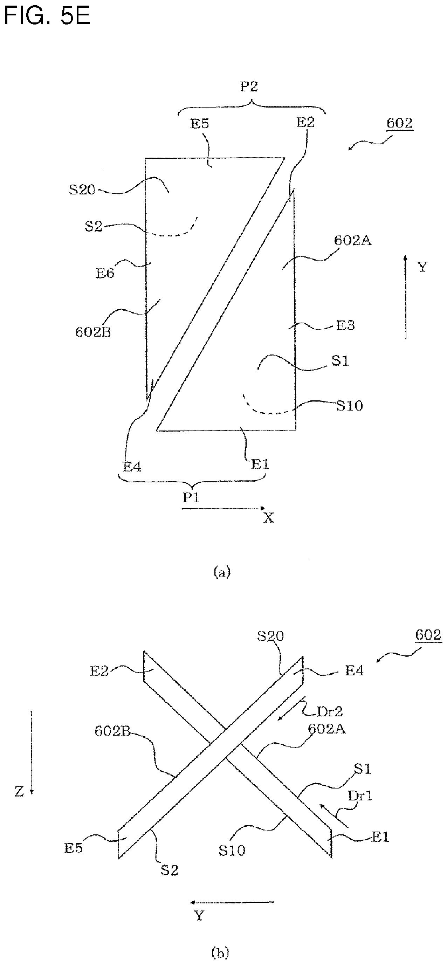

Fig. 5D is a diagram for explaining a vane structure 600 of the vortex generating device 60 as illustrated in Fig. 5C. Fig. 5E is a diagram for explaining the vane bodies 602 of the vane structure 600 of the vortex generating device 60 as illustrated in Fig. 5D.

Fig. 5D, (a), is a perspective view of the vane structure 600.

Fig. 5D, (b), is a top view of the vane structure 600.

Fig. 5D, (c), is a side view of the vane structure 600 as seen from a location close to a second support portion 601B.

Fig. 5D, (d), is a front view of the vane structure 600.

Fig. 5E, (a), is a top view of the vane body 602.

Fig. 5E, (b), is a side view of the vane body 602 as seen from a location closer to the second support portion 601B.

In the vortex generating device 60, openings CL (first spaces) through which air flows is provided between each of the first support bodies 601 and an associated one of the plurality of vane bodies 602. Each of the vane bodies 602 has one end P1 in the flow direction of air, and the other end P2 in the flow direction of air, and also surfaces extending from the one end P1 to the other end P2 along the flow direction of air. The surfaces extending along the flow direction of air correspond to a first surface S1 and a second surface S2 which will be described later. It should be noted that the flow direction of air does not necessarily coincide with the Y direction.

The vortex generating device 60 includes a plurality of vane structures 600. The vane structures 600 each include a first support portion 601A, the second support portion 601B, a first vane 602A and a second vane 602B.

The first support portion 601A and the second support portion 601B are components included in an associated first support body 601. Each of the first support portion 601A and the second support portion 601B is one of constituent components of the first support body 601. A plurality of first support portions 601A and a plurality of second support portions 601B form the first support bodies 601. Each of the second support portions 601B is spaced from an associated one of the first support portions 601A by a predetermined first distance, and faces the associated first support portion 601A.

The vane bodies 602 each include the first vane 602A which is a plate-shaped element, and the second vane 602B which is a plate-shaped element and paired with the first vane 602A. The first vane 602A is located between the first support portion 601A and the second support portion 601B.The second vane 602B is also located between the first support portion 601A and the second support portion 601B.The second vane 602B is a vane paired with the first vane 602A. The first vane 602A includes a first end E1 corresponding to the one end P1, a second end E2 corresponding to the other end P2, a third end E3 connected to the first support portion 601A, the first surface S1 corresponding to one of the surfaces along the flow direction of air, and a first opposite surface S10 located opposite to the first surface S1. The second vane 602B includes a fourth end E4 corresponding to the one end P1, a fifth end E5 corresponding to the other end P2, a sixth end E6 connected to the second support portion 601B, the second surface S2 corresponding to the other of the surfaces along the flow direction of air, and a second opposite surface S20 formed opposite to the second surface S2.

It is assumed that the direction from the first end E1 toward the second end E2 at the first surface S1 is a first direction Dr1, and the direction from the fourth end E4 of toward the fifth end E5 at the second surface S2 is a second direction Dr2. It should be noted that the first surface S1 and the second surface S2 are formed such that the first direction Dr1 and the second direction Dr2 intersect each other. As the vane body 602 is seen side-on as illustrated in Figs. 5D, (c) and 5E, (b), the vane body 602 is located such that the first vane 602A and the second vane 602B intersect each other. It should be noted that the first direction Dr1 and the second direction Dr2 correspond to the above flow direction of air at the vane body 602.

The first vane 602A is triangular. That is, the first surface S1 is shaped in the form of a triangle tapering from the first end E1 toward the second end E2. The second vane 602B is also triangular. That is, the second surface S2 is shaped in the shape of a triangle tapering from the fifth end E5 toward the fourth end E4. In such a manner, the first vane 602A and the second vane 602B are tapered in opposite directions. By virtue of such triangular shapes of the vanes as described above, vortex flows are generated efficiently, and the pressure loss at the vortex generating device 60 can be reduced. Furthermore, since the vortex flows can be generated efficiently, even if the vortex generating device 60 is made smaller, advantages by generation of the vortex flows can be easily obtained.

### <Regarding Dimensions and Other Factors of Various Components>

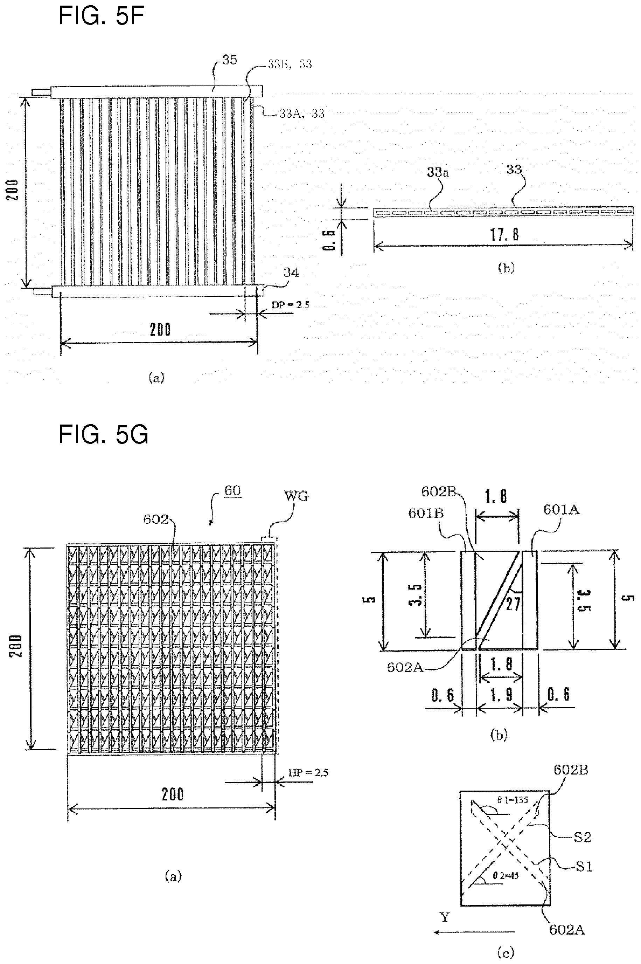

Fig. 5F is a diagram for explaining dimensions of the first heat exchanger 30 as illustrated in Fig. 5A, (a) and those of the flat tube 33 as illustrated in Fig. 5A, (b). Fig. 5F, (a), is a front view of the first heat exchanger 30. Fig. 5F, (b), is a sectional view of the flat tube 33.

The distance from the first header 34 to the second header 35 is 200 (mm).

The width of the flat tube 33 in the direction of the minor axis of the cross section thereof is 0.6 (mm).

The length of the flat tube 33 in the direction of the major axis of the cross section thereof is 17.8 (mm).

Each of the longitudinal length of the first header 34 and the longitudinal length of the second header 35 is 200 (mm).

A pitch DP of the flat tubes 33 is 2.5 (mm). The pitch DP is a distance from one surface of an arbitrary flat tube 33 to one surface of a flat tube 33 adjacent to the arbitrary flat tube 33. Therefore, the pitch DP is a value including the width of the flat tube 33 in the direction of the minor axis of the cross section. Thus, a value obtained by subtracting the width of the flat tube 33 in the direction of the minor axis of the cross section from the pitch DP corresponds to the distance (second distance) between adjacent flat tubes 33, which is 2.5 - 0.6 = 1.9 (mm).

Fig. 5G is a diagram for explaining the dimensions of the vortex generating device 60 as illustrated in Fig. 5C and the vane structure 600 as illustrated in Figs. 5D, (b) and 5D, (c). Fig. 5G, (a), is a front view of the vortex generating device 60. Fig. 5G, (b), is a top view of the vane structure 600. Fig. 5G, (c), is a side view of the vane structure 600 as seen from a location close to the second support portion 601B.

The width of the vortex generating device 60 in the Z direction is 200 (mm).

The width of the vortex generating device 60 in the X direction is 200 (mm).

The dimension of the first support portion 601A in the Y direction is 5 (mm).

The width (thickness) of the first support portion 601A in the X direction is 0.6 (mm).

The dimension of the third end E3 of the first vane 602A in the Y direction is 3.5 (mm).

The width of the first end E1 of the first vane 602A is 1.8 (mm).

The dimension of the second support portion 601B in the Y direction is 5 (mm).

The width (thickness) of the second support portion 601B in the X direction is 0.6 (mm).

The dimension of the sixth end E6 of the second vane 602B in the Y direction is 3.5 (mm).

The width of the fourth end E4 of the second vane 602B is 1.8 (mm).

The first distance between the first support portion 601A and the second support portion 601B is 1.9 (mm).

The vertex angle of the triangular shape of the first surface S1 of the first vane 602A is 27 degrees.

Although it is not illustrated, the vertex angle of the triangular shape of the second surface S2 of the second vane 602B is also 27 degrees.

An angle θ1 at which the first surface S1 inclines to the Y direction is 135 degrees.

An angle θ2 at which the second surface S2 inclines to the Y direction is 45 degrees.

Thus, the first surface S1 and the second surface S2 orthogonally intersect each other.

The first heat exchanger 30 includes first flat tubes 33A and second flat tubes 33B as respective pairs of adjacent flat tubes 33. Each of the first flat tubes 33A corresponds to a first heat transfer tube, and each of the second flat tube 33B corresponds to a second heat transfer tube. The second flat tube 33B is linearly shaped. The second flat tube 33B is separated from the first flat tube 33A by a predetermined second distance. The second flat tube 33B is located parallel to the first flat tube 33A, and also located to face the first flat tube 33A. Within space corresponding to the space between the first flat tube 33A and the second flat tube 33B, associated ones of the vane bodies 602 of the vortex generating device 60 are provided. Since the vane bodies 602 are provided in such a manner, vortex flows evenly flow into the space corresponding to the space between the flat tubes 33, thus improving the heat exchange performance. It is therefore possible to reduce the pressure losses at the vortex generating device 60 and the first heat exchanger 30. As described above regarding the dimensions, the first distance between the first support portion 601A and the second support portion 601B and the distance (second distance) between adjacent flat tubes 33 are both 1.9 (mm); that is, they are equal to each other. Also, the thickness of the first support portion 601A, the thickness of the second support portion 601B, and the width of the flat tube 33 in the direction of the minor axis of the cross section are all 0.6 (mm); that is, they are all equal to each other. Therefore, as long as the first flat tube 33A is located on an extension line of the first support portion 601A in the Y direction, and the second flat tube 33B is located on an extension line of the second support portion 601B in the Y direction, the vane body 602 is located within the space corresponding to the space between the first flat tube 33A and the second flat tube 33B.

It is described above that the vane body 602 is provided within the space corresponding to the space between the first flat tube 33A and the second flat tube 33B. In this regard, in embodiment 1, where a plurality of vane bodies 602 arranged in an axial direction of an associated one of the first flat tubes 33A are defined as a vane body group WG, a single vane body group WG is provided between the associated first flat tube 33A and an associated one of the second flat tubes 33B.

It should be noted that the configuration of the embodiment is not limited to the configuration in which the single vane body group WG is provided in the space corresponding to the space between the associated first flat tube 33A and second flat tube 33B. A plurality of vane body groups WG may be provided the space corresponding to the space between the associated first flat tube 33A and second flat tube 33B such that they are arranged in a direction from the associated first flat tube 33A toward the associated second flat tube 33B. In other words, vane body groups WG of n rows may be arranged in the space corresponding to the space between the associated first flat tube 33A and second flat tube 33B, where n is a natural number. In the case where n is greater than or equal to 2, the first flat tube 33A and the second flat tube 33B are located in front of the first support bodies 601 associated with the vane bodies 602 located at both ends in the X direction. That is, with respect to the first support portion 601A associated with the vane body 602 located at one end in the X direction, the first flat tube 33A is located in front of the first support portion 601A in the Y direction. Further, with respect to the second support portion 601B associated with the vane body 602 located at the other end in the X direction, the second flat tube 33B is located in front of the second support portion 601B in the Y direction.

### <Modification 1 of Vortex Generating Device 60>

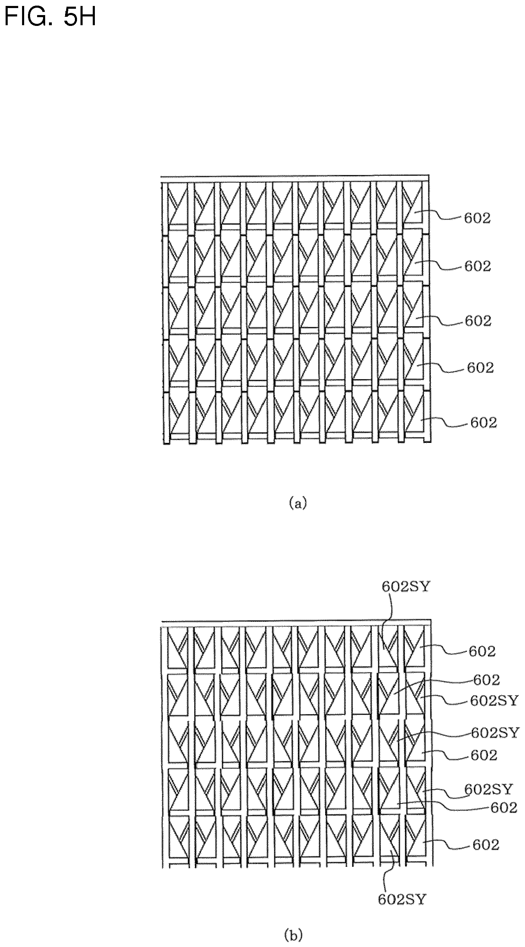

Fig. 5H is a diagram for explaining modification 1 of the vortex generating device 60. Fig. 5H, (a), illustrates the arrangement of the plurality of vane bodies 602 of the vortex generating device 60 as described above. Fig. 5H, (b), is a diagram for explaining modification 1, and illustrates an example of the arrangement of the vane bodies 602 (first vane bodies) as described above and vane bodies (second vane bodies 602SY) which are different in shape from the vane bodies 602.

In modification 1, the vortex generating device 60 includes two types of vane bodies which have different shapes. That is, the vortex generating device 60 includes the vane bodies 602 (which will also be referred to as first vane bodies) and the second vane bodies 602SY. Each of the first vane bodies and an associated one of the second vane bodies 602Y are symmetrical. Each second vane body 602SY is formed in such a shape that the first vane 602A and the second vane 602B of the first vane body are shifted symmetrically with respect to an imaginary plane which passes through an intermediate position between the first support portion 601A and the second support portion 601B, and which is also parallel to the first support portion 601A.

In modification 1, the first vane bodies and the second vane bodies 602SY are arranged in a staggered manner. Thereby, it is possible to more efficiently disturb the flow of air which is a laminar flow, and change the flow of air into a vortex flow.

It should be noted that although the above description is made by referring to by way of example the case in which two kinds of vane bodies having different shapes are arranged in a staggered manner, the configuration of the modification is not limited to such a configuration. The shapes of the vane bodies may be changed in accordance with the distribution of air velocities at the vortex generating device 60, or the arrangement of the plurality of vane bodies may be changed in accordance with the distribution of the air velocities at the vortex generating device 60.

### <Modification 2 of Vortex Generating Device 60>

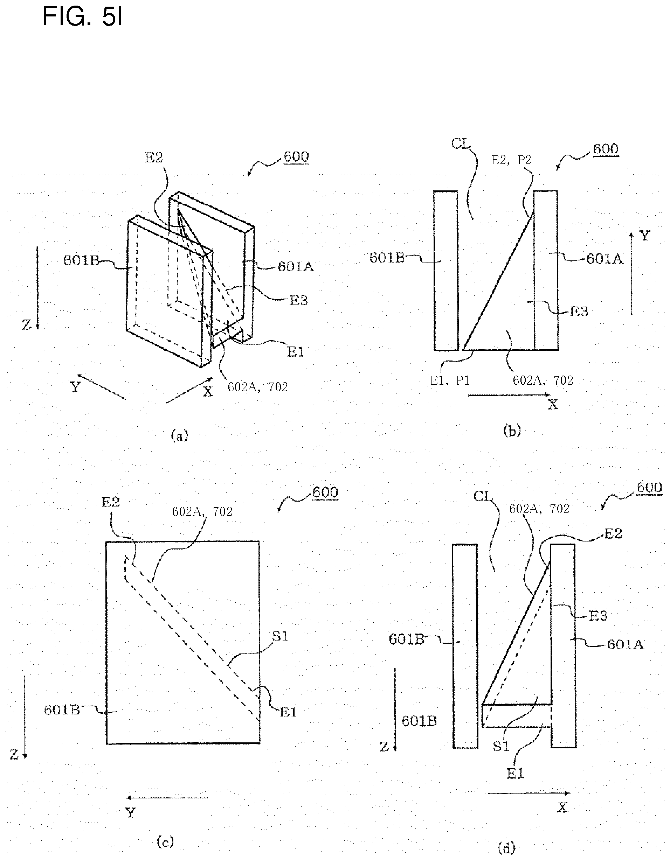

Fig. 5I is a schematic for explaining modification 2 of the vortex generating device 60. In modification 2, the number of vanes included in a single vane body is one.

Fig. 5I, (a), is a perspective view of the vane structure 600 according to modification 2.

Fig. 5I, (b), is a top view of the vane structure 600 according to modification 2.

Fig. 5I, (c), is a side view of the vane structure 600 according to modification 2 as seen from a location close to the second support portion 601B.

Fig. 5I, (d), is a front view of the vane structure 600 according to modification 2.

In modification 2, each of vane bodies 702 includes a single vane which is a plate-shaped element. More specifically, each vane body 702 does not include a vane corresponding to the second vane 602B of the vane body 602. The vane of each vane body 702 has the same configuration as the first vane 602A, and its description will thus be omitted. It should be noted that as a matter of convenience for explanation, the vane of the vane body 702 is also illustrated as the first vane 602A in the figures, because the vane of the vane body 702 has the same configuration as the first vane 602A.

The vane of the vane body 702, as well as the first vane 602A, includes the first end E1 associated with the one end P1, the second end E2 associated with the other end P2, the third end E3 connected to the first support portion 61A, the first surface S1 corresponding to a surface extending along the flow direction of air, and the first opposite surface S10 located opposite to the first surface S1.

### <Modification 3 of Vortex Generating Device 60>

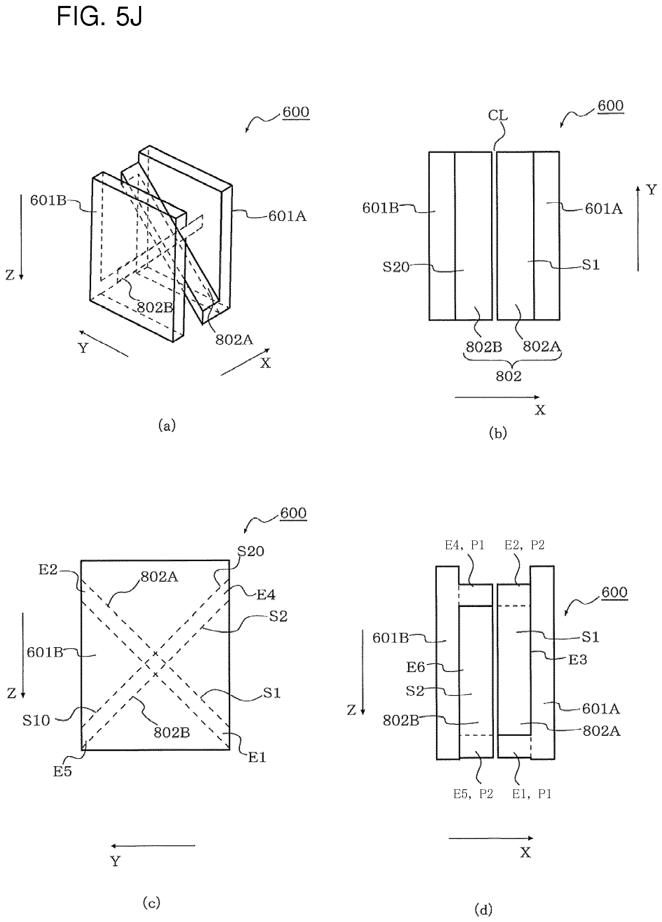

Fig. 5J is a schematic for explaining modification 3 of the vortex generating device 60. In modification 3, the vanes included in the vane bodies are quadrangular, not triangular.

Fig. 5J, (a), is a perspective view of the vane structure 600 according to modification 3.

Fig. 5J, (b), is a top view of the vane structure 600 according to modification 3.

Fig. 5J, (c), is a side view of the vane structure 600 according to modification 3 as seen from a position near the second support portion 601B.

Fig. 5J, (d), is a front view of the vane structure 600 according to modification 3.

As illustrated in Fig. 5J, a vane body 802 of modification 3 includes a first vane 802A and a second vane 802B, which are both quadrangular. The first vane 802A and the second vane 802B are different from the second vane 602Aand the second vane 602B on the point that the first vane 802A and the second vane 802B are quadrangular; however, the other configurations of the first vane 802A and the second vane 802B are the same as or similar to those of the first vane 602A and the second vane 602B, and their explanations will thus be omitted. Also, modification 3 can be combined with modification 2. That is, the first vane 602A of the vane body 702 may be quadrangular.

As described above, in the refrigeration cycle apparatus 100, the compressor 10, the first heat exchanger 30, the expansion device 40 and the second heat exchanger 50 form the refrigerant circuit, and the vortex generating device 60 is located upstream of the first heat exchanger 30. It is therefore possible to improve the heat exchange performance of the first heat exchanger 30 which is a fin-less heat exchanger.

Furthermore, the first heat exchanger 30 is not provided with fins. Therefore, a thermal contact resistance is not present between the heat transfer tubes and fins, or a resistance is not made by thermal conduction which would be caused by fins themselves. Therefore, the heat exchange performance is improved.

Further, when the first heat exchanger 30 functions as the evaporator, dew water flows and drops down along the flat tubes 33 disposed parallel to the gravity direction. Thus, the drainage characteristic of the refrigeration cycle apparatus 100 is improved. By virtue of improvement of the drainage characteristic, it is possible reduce accumulation of ice at a lower portion of the first heat exchanger 30 even while the refrigeration cycle apparatus 100 is performing, for example, a defrosting operation.

It should be noted that as other examples of the refrigeration cycle apparatus 100, a water heater, a refrigerating machine and an integrated air-conditioner and water-heater system are present. In any case, the heat exchange performance of the first heat exchanger 30 can be improved.

Further, the refrigerant for use in the refrigeration cycle apparatus 100 is not particularly limited. R410A, R32 and HFO1234yf can be used as the refrigerant.

Also, although air and refrigerant are described above as examples of fluids between which heat exchange is performed in the second heat exchanger 50, the fluids are not limited to air and refrigerant. That is, the fluids for such heat exchange in the second heat exchanger 50 vary in accordance with the form of the second heat exchanger 50.

Furthermore, any refrigerating machine oil such as mineral oil, alkylbenzene oil, ester oil, ether oil or fluorine oil can be used for the refrigeration cycle apparatus 100 regardless whether the oil is soluble in refrigerant or not.

Although the refrigeration cycle apparatus 100 is described above by referring to by way of example the case where the flow of refrigerant can be changed by the flow switching device 20, the refrigeration cycle apparatus 100 may be configured, without including the flow switching device 20, to function as a heating-only apparatus in which the first heat exchanger 30 functions only as the evaporator.

Also, not only the first heat exchanger 30 but the second heat exchanger 50 may be formed as the fin-less heat exchanger, and the vortex generating device 60 may be provided upstream of the second heat exchanger 50.

### Embodiment 2

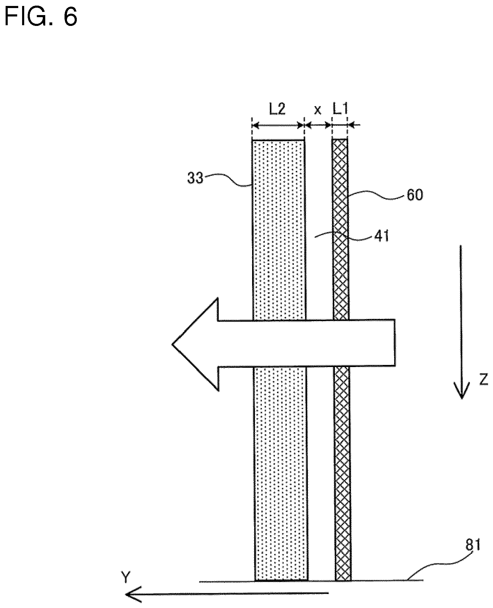

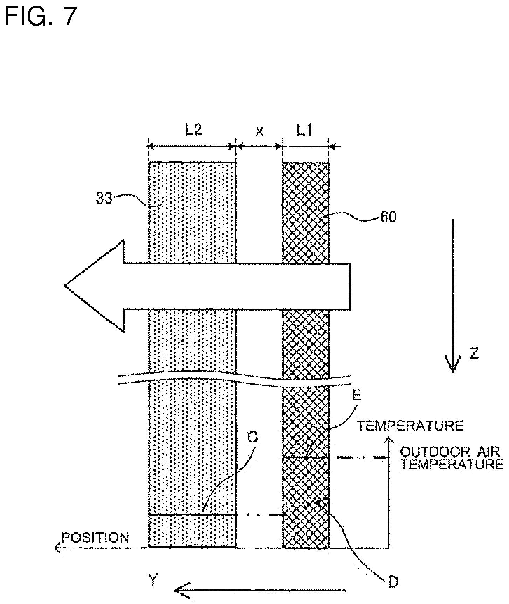

Fig. 6 is a side view illustrating an example of the configurations of a first heat exchanger 30 and a vortex generating device 60 provided in a refrigeration cycle apparatus according to embodiment 2 of the present invention. Fig. 7 is a diagram schematically illustrating the temperatures of the first heat exchanger 30 and the vortex generating device 60 in the case where the first heat exchanger 30 provided in the refrigeration cycle apparatus according to embodiment 2 of the present invention is used as the evaporator. The first heat exchanger 30 and the vortex generating device 60 provided in the refrigeration cycle apparatus according to embodiment 2 of the present invention will be described in detail with reference to Figs. 6 and 7. It should be noted that in Figs. 6 and 7, the flow of air is indicated by an outlined arrow.

The basic configuration of the refrigeration cycle apparatus according to embodiment 2 of the present invention is the same as or similar to that of the refrigeration cycle apparatus 100 according to embodiment 1 of the invention. Furthermore, embodiment 2 will be described mainly by referring to the differences between embodiments 1 and 2, and elements which are the same as or similar to those of embodiment 1 will be denoted by the same reference signs, and their descriptions will thus be omitted.

Embodiment 1 is described above by referring to by way of example the case where the vortex generating device 60 is provided upstream of the first heat exchanger 30. On the other hand, embodiment 2 will be described by referring to by way of example the case where the vortex generating device 60 is provided upstream of the first heat exchanger 30, and also separated therefrom by space 41 corresponding to a distance x. That is, the vortex generating device 60 is provided in non-contact with the first heat exchanger 30. It should be noted that L1 in Figs. 6 and 7 represents the thickness of the vortex generating device 60 (the width of the vortex generating device 60 in the Y direction) and L2 represents the width of the flat tube 33 in the direction of the major axis of the cross section (the width of the flat tube 33 in the Y direction).

Since the first heat exchanger 30 and the vortex generating device 60 are provided such that they are separated from each other by the space 41 corresponding to the distance x, when the first heat exchanger 30 is used as the evaporator, the temperatures of the flat tube 33 of the first heat exchanger 30 and the vortex generating device 60 are illustrated in Fig. 7.

When the first heat exchanger 30 is used as the evaporator, the temperature of refrigerant flowing through the flat tube 33 (including the first header 34 and the second header 35) decreases to a value lower than an outdoor air temperature. Furthermore, air sent to the first heat exchanger 30 by the first fan 31 is cooled by the flat tube 33, as a result of which the temperature of the air decreases as the air flows toward the downstream side. It should be noted that the surface temperature of the flat tube 33 is approximately equal to the temperature of the refrigerant flowing through the flat tube 33. Further, at locations in the flow direction of air from the first fan 31 (Y direction), the temperature of the refrigerant hardly changes. Therefore, the surface temperature of the flat tube 33 is constant in the flow direction of air from the first fan 31 (Y direction) (straight line C in Fig. 7).

In the case where the first heat exchanger 30 and the vortex generating device 60 are in contact with each other, the surface temperature of the vortex generating device 60 is close to the surface temperature of the flat tube 33 since a surface of the vortex generating device 60 is in contact with the flat tube 33, and the surface temperature of the vortex generating device 60 changes toward the upstream side in the flow of air due to thermal conduction.

Thus, part of the flat tube 33 has a temperature 00lower than a dew-point temperature of air. Then, water droplets (dew) adhere to the surface of the flat tube 33, though the first heat exchanger 30 is the fin-less heat exchanger. It should be noted that the water droplets adhering to the surface of the flat tube 33 will be referred to as dew water.

When the first heat exchanger 30 is used as the evaporator, the temperature of the refrigerant flowing through the flat tube 33 (including the first header 34 and the second header 35) decreases to a value lower than the outdoor air temperature. Thereby, the surface temperature of the flat tube 33 decreases to a value lower than the dew-point temperature of air. Then, water droplets (dew) adhere to the surface of the flat tube 33, though the first heat exchanger 30 is the fin-less heat exchanger. It should be noted that the water droplets adhering to the surface of the flat tube 33 will be referred to as dew water.

Further, when the temperature of the refrigerant flowing through the flat tube 33 is lower than the outdoor air temperature, and lower than or equal to 0 degrees Celsius, the dew water adhering to the surface of the flat tube 33 is frozen and frost is formed. If dew condensation and frost formation occur, the flow of air in the first heat exchanger 30 is blocked. If the flow of air is blocked, the heat exchange performance of the first heat exchanger 30 is reduced.

In addition, in the refrigeration cycle apparatus according to embodiment 2, the vortex generating device 60 is provided upstream of the first heat exchanger 30. It should be noted that in the case where the flat tube 33 of the first heat exchanger 30 and the vortex generating device 60 are in contact with each other, that is, the distance x is zero, the temperature of the vortex generating device 60 becomes close to the temperature of the flat tube 33 because of the thermal conduction. That is, the temperature of the vortex generating device 60 is reduced by the refrigerant flowing through the flat tube 33, as a result of which the closer a portion of the vortex generating device 60 to the upstream end in the flow direction of air, the higher the temperature of the portion of the vortex generating device 60 because of the thermal conduction, as shown by a straight line D represented by a two-dot chain line in Fig. 7. As a result, there is a possibility that the dew condensation and frost formation will occur not only at the first heat exchanger 30 but at the vortex generating device 60, and the flow of air in the vortex generating device 60 will be blocked.

In view of the above, as illustrated in Fig. 6, in the refrigeration cycle apparatus according to embodiment 2, the first heat exchanger 30 and the vortex generating device 60 are provided not in contact with each other in order that the temperature of the flat tube 33 of the first heat exchanger 30 should not be transferred to the vortex generating device 60 by the thermal conduction. That is, since the space 41 is provided, the vortex generating device 60 is hardly cooled by the refrigerant flowing through the flat tube 33. Thus, the temperature of the vortex generating device 60 is close to the outdoor air temperature as indicated by a solid line E in Fig. 7, and the dew condensation and frost formation do not easily occur at the vortex generating device 60.

As described above, when the first heat exchanger 30 is used as the evaporator, frost formation does not easily occur at the vortex generating device 60 because of provision of the space 41. Thus, in embodiment 2, vortex flows generated at the vortex generating device 60 can be continuously and stably supplied to the first heat exchanger 30 for a longer time period. It is therefore possible to further improve the heat exchange performance of the first heat exchanger 30.

The distance x is determined in consideration of the particle diameter of dew or frost that is assumed to be formed on the surface of the flat tube 33 or the vortex generating device 60. For example, preferably, the distance x should be 1 mm to 5 mm. This is because if the distance x is excessively great, the vortex flow may fail to reach the first heat exchanger 30, and if the distance x is excessively small, the dew water generated at the first heat exchanger 30 may adhere to the vortex generating device 60.

It is appropriate that the first heat exchanger 30 and the vortex generating device 60 are separated from each other by the distance x at, for example, a mounting surface (mounting surface 81 as illustrated in Fig. 6) of a unit on which the first heat exchanger 30 and the vortex generating device 60 are mounted.

Furthermore, in the case where the first heat exchanger 30 and the vortex generating device 60 are provided as a unit using a common frame for the first heat exchanger 30 and the vortex generating device 60, space corresponding to the distance x may be provided in the frame. In this case, it is appropriate that the frame is formed of a material, for example, resin, which has a lower thermal conductivity than those of the flat tube 33 of the first heat exchanger 30 and the vortex generating device 60.

Alternatively, a spacer (for example, a projection or a protrusion) which is a component separate from the first heat exchanger 30 and the vortex generating device 60 may be provided on at least one of facing surfaces of the first heat exchanger 30 and the vortex generating device 60 in order to provide space corresponding to the distance x. That is, the space 41 is provided between the first heat exchanger 30 and the vortex generating device 60 by interposing the spacer between the first heat exchanger 30 and the vortex generating device 60.

It is appropriate that the spacer is made of a material, for example, resin, which has a lower thermal conductivity than the flat tube 33 of the first heat exchanger 30 and the vortex generating device 60. With respect to the spacer which is a component separate from the first heat exchanger 30 and the vortex generating device 60, the number of spacers, the size of the spacer or spacers, the material thereof, etc., are not particularly limited.

Furthermore, a spacer formed in the shape of a frame may be provided on at least one of the facing surfaces of the first heat exchanger 30 and the vortex generating device 60 in order to provide space corresponding to the distance x.

Management of the distance x corresponding to the space 41 is facilitated because the space 41 is provided by interposing the spacer between the first heat exchanger 30 and the vortex generating device 60. That is, it is possible to prevent the size of the space 41 from differing from a set value due to, for example, errors in provision of the first heat exchanger 30 and the vortex generating device 60. Furthermore, a flow of air disturbed in a desired state by the vortex generating device 60 can be supplied to the first heat exchanger 30 by accurately setting the distance x, which corresponds to the space 41, between the first heat exchanger 30 and the vortex generating device 60. Thus, the heat exchange performance of the first heat exchanger 30 can be further improved.

Moreover, when the first heat exchanger 30 is used as the evaporator, it is possible to reduce cooling of the vortex generating device 60 via the spacer, since the spacer is formed of a material having a lower thermal conductivity than the first heat exchanger 30 and the vortex generating device 60. Therefore, frost formation does not easily occur at the vortex generating device 60 even if the first heat exchanger 30 and the vortex generating device 60 are thermally connected to each other by the spacer. Thus, in embodiment 2, the flow of air with vortexes generated by the vortex generating device 60 can be supplied to the first heat exchanger 30 continuously and stably for a longer time period. Therefore, the heat exchange performance of the first heat exchanger 30 can be further improved.

The spacer may be provided as a product molded integrally with the vortex generating device 60. For example, portions of an end of the vortex generating device 60 that is located closer to the first heat exchanger 30 may be projected toward the first heat exchanger 30 and be applied as spacers. Also, for example, the spacer may be provided as a product molded integrally with the first heat exchanger 30. That is, portions of an end of the first heat exchanger 30 that is located closer to the vortex generating device 60 may be projected toward the vortex generating device 60 and be applied as spacers.

Even in the case where the spacer is formed in the above manner, it is possible to accurately set the distance x, which corresponds to the space 41, between the first heat exchanger 30 and the vortex generating device 60. Thus, a flow of air disturbed in a desired state by the vortex generating device 60 can be supplied to the first heat exchanger 30, and as a result the heat exchange performance of the first heat exchanger 30 can be further improved. Furthermore, in the case where the above portions of the vortex generating device 60 or the first heat exchanger 30 are used as spacer, the first heat exchanger 30 and the vortex generating device 60 are in contact with each other at the portions which are used as the spacers. In this case, since several locations can be determined as contact locations, the vortex generating device 60 is not easily cooled. That is, frost formation does not easily occur at the vortex generating device 60.

### Embodiment 3

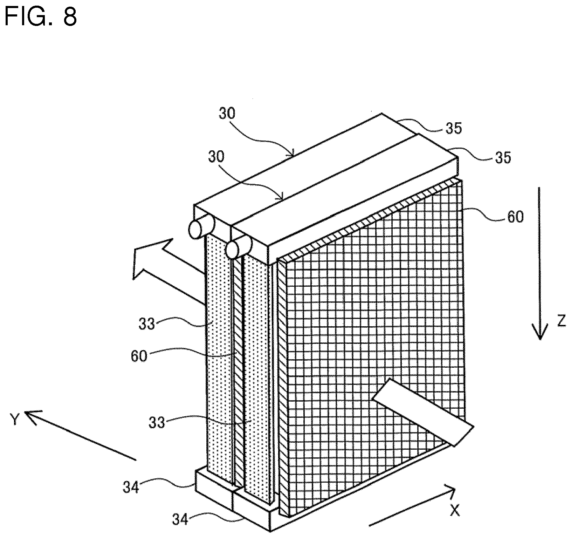

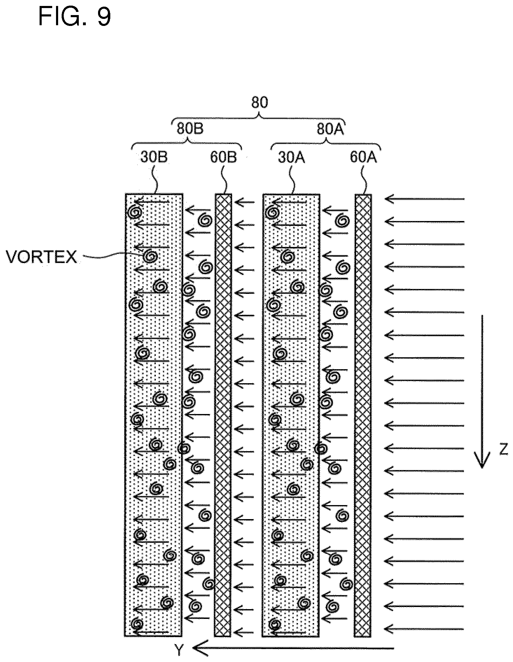

Fig. 8 is a perspective view illustrating an example of the configurations of a first heat exchanger 30 and a vortex generating device 60 provided in a refrigeration cycle apparatus according to embodiment 3 of the present invention. Fig. 9 is a side view illustrating the example of the configurations of the first heat exchanger 30 and the vortex generating device 60 provided in the refrigeration cycle apparatus according to embodiment 3 of the present invention. The example of the first heat exchanger 30 and the vortex generating device 60 provided in the refrigeration cycle apparatus according to embodiment 3 of the present invention will be described in detail with reference to Figs. 8 and 9.

It should be noted that the flow of air is indicated by an outlined arrow in Fig. 8 and by solid line arrows in Fig. 9. Fig. 9 schematically shows that vortex flows are generated in a region located downstream of the vortex generating device 60.

The basic configuration of the refrigeration cycle apparatus according to embodiment 3 of the present invention is the same as or similar to that of the refrigeration cycle apparatus 100 according to embodiment 1 of the invention. Embodiment 3 will be described mainly by referring to differences between embodiment 3 and embodiments 1 and 2; and elements which are the same as those of embodiments 1 and 2 will be denoted by the same reference signs, and their descriptions will thus be omitted.

Embodiment 2 is described above by referring to by way of example the case where the vortex generating device 60 is provided upstream of the first heat exchanger 30, and separated therefrom by the space 41 (distance x). On the other hand, in embodiment 3, a plurality of groups each consisting of a single first heat exchanger 30 and a single vortex generating device 60 are arranged in a row in the flow direction of air. That is, in each of these groups, the vortex generating device 60 is located upstream of the first heat exchanger 30.

Referring to Fig. 9, a heat exchange portion 80A and a heat exchange portion 80B are illustrated in this order from a windward side, and each of these heat exchange portions correspond to a single group consisting of the first heat exchanger 30 and the vortex generating device 60. Furthermore, the first heat exchanger 30 and the vortex generating device 60 which form the heat exchange portion 80A are illustrated as a first heat exchanger 30A and a vortex generating device 60A, respectively, and the first heat exchanger 30 and the vortex generating device 60 which form the heat exchange portion 80B are illustrated as a first heat exchanger 30B and a vortex generating device 60B, respectively.

It should be noted that in the following description, the heat exchange portion 80A and the heat exchange portion 80B are correctively referred to as a heat exchange unit 80.

The flow of air in the heat exchange unit 80 will be described.

When the first fan 31 is rotated, air is sent to the heat exchange unit 80. The air is first supplied to the heat exchange portion 80A. In the heat exchange portion 80A, the air sent by the first fan 31 passes through the vortex generating device 60A before flowing into the first heat exchanger 30A. The vortex generating device 60A changes the flow of air that is a laminar flow into a turbulent flow.

The flow of air having changed into a vortex flow is supplied to the heat exchange portion 80B after passing through the first heat exchanger 30A. When the air passing through the heat exchange portion 80A passes through the first heat exchanger 30A, it is regulated, and the vortex flow shrinks or disappears. In such a case, there is a possibility that a heat exchange performance to be achieved by the vortex generating device 60 cannot be achieved at the heat exchange portion 80B. Therefore, the vortex generating device 60B is provided upstream of the first heat exchanger 30B in the heat exchange portion 80B as well, and air flowing from the heat exchange portion 80A is changed into a vortex flow by the vortex generating device 60B.

The above operation is performed by the entire heat exchange unit 80, whereby the heat exchange performance to be achieved by the vortex generating device 60 can be promoted by the entire heat exchange unit 80. That is, in the heat exchange unit 80, even in the case where a plurality of heat exchange portions each consisting of the first heat exchanger 30 and the vortex generating device 60 are arranged in a row, it is possible to promote the heat exchange performance because of provision of the vortex generating device 60 in each group.

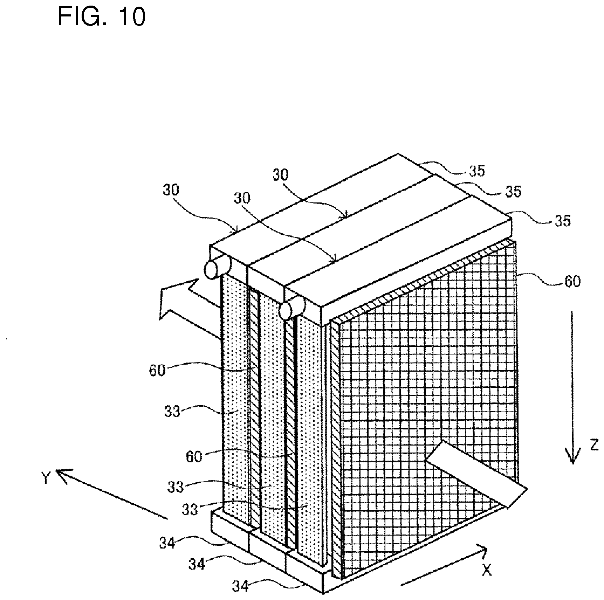

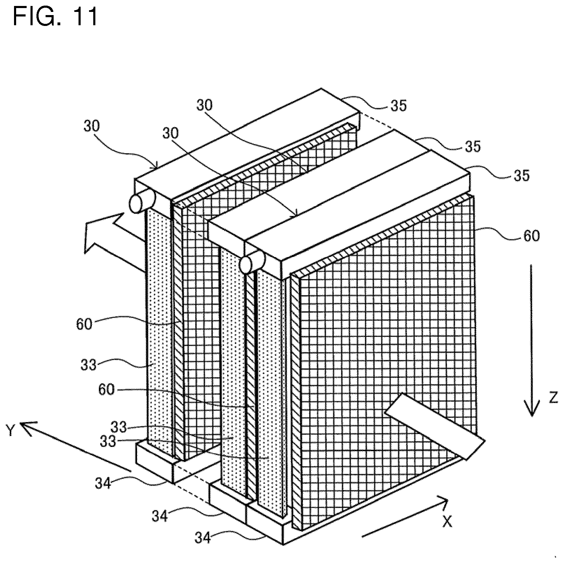

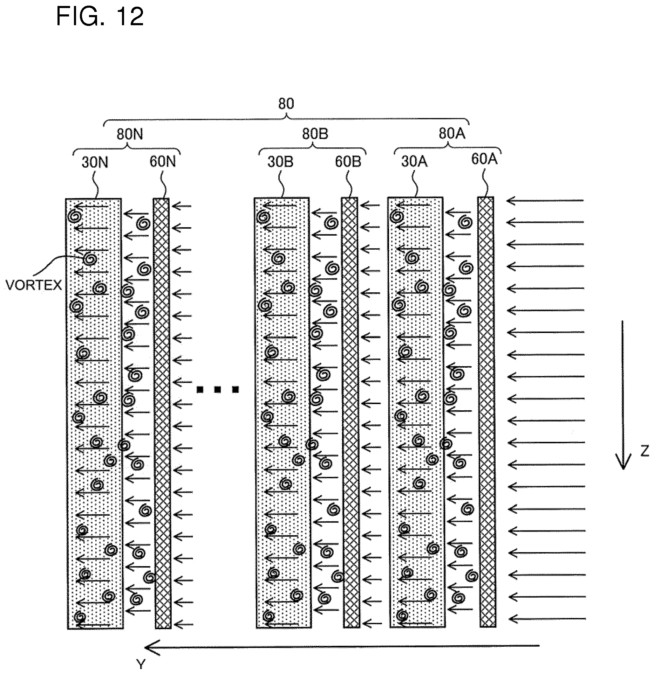

Fig. 10 is a perspective view illustrating another example of the configurations of the first heat exchanger 30 and the vortex generating device 60 provided in the refrigeration cycle apparatus according to embodiment 3 of the present invention. Fig. 11 is an exploded perspective view illustrating a further example of the configurations of the first heat exchanger 30 and the vortex generating device 60 provided in the refrigeration cycle apparatus according to embodiment 3 of the present invention. Fig. 12 is a side view illustrating the further example of the configurations of the first heat exchanger 30 and the vortex generating device 60 provided in the refrigeration cycle apparatus according to embodiment 3 of the present invention. The examples of the first heat exchanger 30 and the vortex generating device 60 provided in the refrigeration cycle apparatus according to embodiment 3 of the present invention will be described in detail with reference to Figs. 10 to 12.

Figs. 8 and 9 illustrate by way of example the case in which the heat exchange unit 80 includes two groups of heat exchange portions in a row. On the other hand, Figs. 10 to 12 illustrate by way of example the case where the heat exchange unit 80 includes three or more groups of heat exchange portions in a row.

Referring to Fig. 12, a heat exchange portion 80A, a heat exchange portion 80B ... and a heat exchange portion 80N are illustrated in this order from a windward side, and each of these heat exchange portions is provided as a single group consisting of the first heat exchanger 30 and the vortex generating device 60. The first heat exchanger 30 and the vortex generating device 60 which form the heat exchange portion 80N are illustrated as a first heat exchanger 30N and a vortex generating device 60N, respectively. That is, any number of heat exchange portions may be provided between the heat exchange portion 80B and the heat exchange portion 80N.

As illustrated in Figs. 10 and 12, even in the case where the heat exchange unit 80 includes three or more groups of heat exchange portions in a row, it is possible to promote the heat exchange performance of the entire heat exchange unit 80 because of provision of the vortex generating devices 60, since in each of heat exchange portions, the vortex generating device 60 is located upstream of the first heat exchanger 30 in each heat exchange portion.

Incidentally, measures against dew condensation or frost formation at the vortex generating device 60 are taken by setting the distance x, which is described with respect to embodiment 2, between the first heat exchanger 30 and the vortex generating device 60. To be more specific, the first heat exchanger 30 and the vortex generating device 60 of each of the heat exchange portions which form the heat exchange unit 80 are provided not in contact with each other in order that the temperature of the flat tube 33 of the first heat exchanger 30 should not be transferred to the vortex generating device 60 by the thermal conduction.

It should be noted that the distances x in all the heat exchange portions may be set to the same value, or it may be set that the closer an exchange portion to the downstream end, the greater (smaller) the distance x in the exchange portion. That is, the distances x in all the heat exchange portions may be set to the same value or different values, or some of the distances x may be set to the same value.

Furthermore, not all the vortex generating devices 60 of the heat exchange unit need to be provided upstream of the respective first heat exchangers 30. It suffices that in each of at least the first two of all the heat exchange portions from the upstream end, the vortex generating device 60 is provided upstream of the first heat exchanger 30.

### Embodiment 4

As described above, various types of fans such as a propeller fan, a cross-flow fan, a sirocco fan and a turbofan can be used as the first fan 31 which sends air to the first heat exchanger 30 and the vortex generating device 60. In this case, in the case where a comparatively regulated flow of air is supplied to the vortex generating device 60, more stable vortexes can be generated at the vortex generating device 60, and the heat exchange performance of the first heat exchanger 30 is improved. In view of this, with respect to embodiment 4, a preferable example of the arrangement of the first heat exchanger 30 and the vortex generating device 60, which varies in accordance with the type of the fan used as the first fan 31, will be described. It should be noted that with respect to embodiment 4, matters which will not be particularly described are the same as or similar to matters described with respect to embodiments 1 to 3, and functions and elements which are the same as those in these embodiments are denoted by the same reference signs in the following descriptions concerning them.

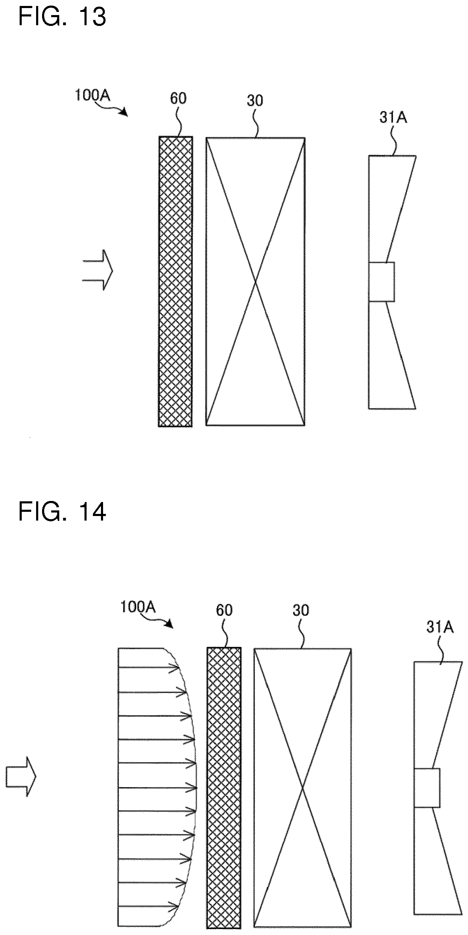

Fig. 13 is a side view illustrating an example of the configuration of a refrigeration cycle apparatus according to embodiment 4 of the present invention. In Fig. 13, an outlined arrow indicates the flow direction of air which is sent by the first fan 31, and the refrigeration cycle apparatus according to embodiment 4 of the present invention is illustrated as a refrigeration cycle apparatus 100A.

The refrigeration cycle apparatus 100A as illustrated in Fig. 13 employs a propeller fan 31A as the first fan 31. A flow of air on a blowing side of the propeller fan 31A flows while swirling about a rotation axis of the propeller fan 31A. On the other hand, a flow of air on a suction side of the propeller fan 31A is regulated, as compared with the flow of air on the blowing side.

Therefore, in the case where the propeller fan 31A is employed as the first fan 31, it is preferable that the propeller fan 31A be provided downstream of the first heat exchanger 30 in the flow direction of air which is sent by the propeller fan 31A. By disposing the propeller fan 31A in this manner, a comparatively regulated flow of air can be supplied to the vortex generating device 60, and as a result, stable vortexes can be generated at the vortex generating device 60. Thus, the heat exchange performance of the first heat exchanger 30 can be improved.

Fig. 14 is a diagram additionally illustrating a velocity distribution of a flow of air which flows into the vortex generating device 60 in the refrigeration cycle apparatus 100A as illustrated in Fig. 13. Since the propeller fan 31A is provided downstream of the first heat exchanger 30 in the flow direction of air which is sent by the propeller fan 31A, a comparatively regulated flow of air can be supplied to the vortex generating device 60. However, the velocity of the flow of air which flows into the vortex generating device 60 varies in accordance with which part of the vortex generating device 60 the flow of air flows into.

More specifically, the velocity of a flow of air, that is, an air velocity, is lower at part of the vortex generating device 60 where a flow of air to be sucked toward the outer periphery of the propeller fan 31A passes than in part of the vortex generating device 60 where a flow of air to be sucked toward a center portion of the propeller fan 31A passes. Further, at part of the vortex generating device 60 where the air velocity is low, vortexes are not easily generated, as compared with part of the vortex generating device 60 where the air velocity is high. That is, in a flow of air passing through the part of the vortex generating device 60 where the air velocity is low, the number of vortexes generated is small, and the heat exchange performance is lower at the part of the first heat exchanger 30 where the above flow of air passes than in part of the first heat exchanger 30 where a flow of air having a high air velocity passes.

In view of the above, as illustrated in Fig. 14, a larger number of vane structures 600 may be provided in part of the vortex generating device 60 than at part thereof where the air velocity is higher than that at the above former part. By virtue of this configuration, vortexes equivalent to vortexes generated in the part of the vortex generating device 60 where the air velocity is high can be generated also at the part of the vortex generating device 60 where the air velocity is low. Thus, the heat exchange performance of the first heat exchanger 30 can be further improved.

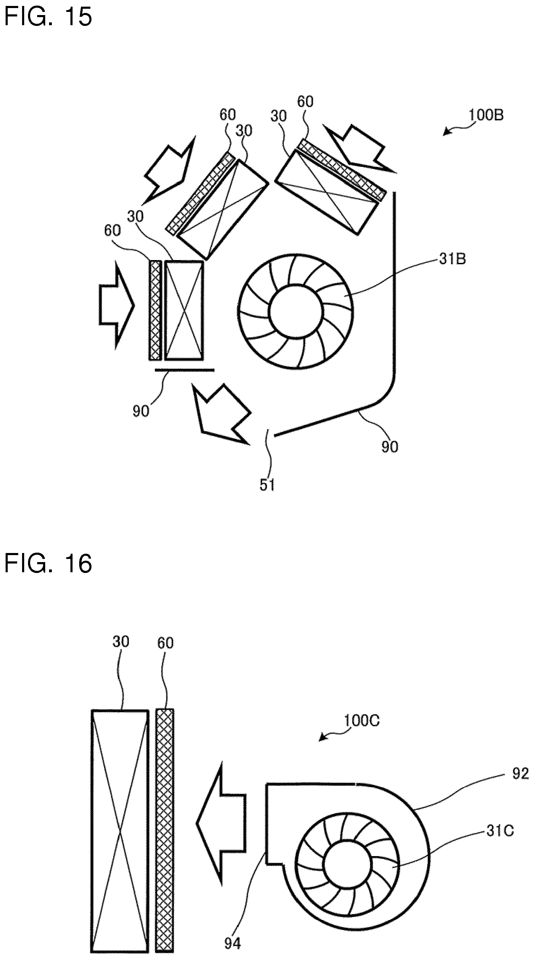

Fig. 15 is a side view illustrating another example of the configuration of the refrigeration cycle apparatus according to embodiment 4 of the present invention. It should be noted that outlined arrows in Fig. 15 indicate flow directions of air which is sent by the first fan 31. In Fig. 15, the refrigeration cycle apparatus according to embodiment 4 of the present invention is illustrated as a refrigeration cycle apparatus 100B.

The refrigeration cycle apparatus 100B as illustrated in Fig. 15 employs a cross-flow fan 31B as the first fan 31. To be more specific, the refrigeration cycle apparatus 100B as illustrated in Fig. 15 includes a housing 90 having an air outlet 91. The cross-flow fan 31B is provided in the housing 90 in such a way as to cover a region located above the air outlet 91. When the cross-flow fan 31B provided in such a manner is rotated, air is sucked from an upper portion of the cross-flow fan 31B and is blown out from a lower portion of the cross-flow fan 31B toward the air outlet 91. At this time, a flow of air at an inlet of the cross-flow fan 31B is regulated comparatively.

Therefore, in the case where the cross-flow fan 31B is employed as the first fan 31, it is preferable that the cross-flow fan 31B be provided downstream of the first heat exchanger 30 in the flow direction of air which is sent by the cross-flow fan 31B. In the case where the cross-flow fan 31B is provided in such a manner, a comparatively regulated flow of air can be supplied to the vortex generating device 60, and as a result stable vortexes can be generated at the vortex generating device 60. It is therefore possible to improve the heat exchange performance of the first heat exchanger 30.

It should be noted that also in the case where the cross-flow fan 31B is employed as the first fan 31, the velocity of the flow of air which flows into the vortex generating device 60 varies in accordance with which part of the vortex generating device 60 the flow of air flows into. Therefore, also in the refrigeration cycle apparatus 100B as illustrated in Fig. 15, it is preferable that a larger number of vane structures 600 be provided in part of the vortex generating device 60 than at part thereof where the air velocity of the flow of air is higher than that at the former part. By applying this configuration, vortexes equivalent to vortexes generated at part of the vortex generating device 60 where the air velocity is high can be generated in part of the vortex generating device 60 where the air velocity is low. Therefore, the heat exchange performance of the first heat exchanger 30 can be further improved.

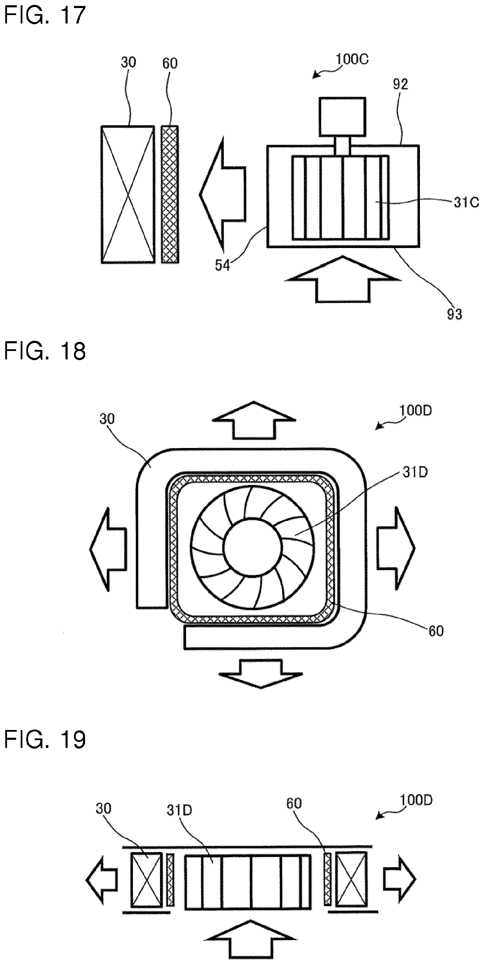

Fig. 16 is a plan view illustrating a further example of the configuration of the refrigeration cycle apparatus according to embodiment 4 of the present invention. Fig. 17 is a side view illustrating the further example of the configuration of the refrigeration cycle apparatus according to embodiment 4 of the present invention as is illustrated in Fig. 16. It should be noted that outlined arrows in Figs. 16 and 17 indicate flow directions of air which is sent by the first fan 31. Also, Figs. 16 and 17 illustrate a cross section of a casing 95 in which a sirocco fan 31C is provided. In Figs. 16 and 17, the refrigeration cycle apparatus according to embodiment 4 of the present invention is illustrated as a refrigeration cycle apparatus 100C.

The refrigeration cycle apparatus 100C as illustrated in Figs. 16 and 17 employs the sirocco fan 31C as the first fan 31. To be more specific, as illustrated in Figs. 16 and 17, the sirocco fan 31C is provided in, for example, the casing 95. In the lower surface of the casing 95, an air inlet 93 is formed at a position where the air inlet 93 faces a rotation axis of the sirocco fan 31C. In a side surface of the casing 95, an air outlet 94 is formed to face an outer circumferential surface of the sirocco fan 31C. When the sirocco fan 31C is rotated, air is sucked into the casing 95 through the air inlet 93, and is blown out of the casing 95 through the air outlet 94. At this time, a flow of air at the outlet of the sirocco fan 31C is regulated comparatively.

Therefore, in the case where the sirocco fan 31C is employed as the first fan 31, it is preferable that the sirocco fan 31C be provided upstream of the vortex generating device 60 in the flow direction of air which is sent by the sirocco fan 31C. In the case where the sirocco fan 31C is provided in such a manner, a comparatively regulated flow of air can be supplied to the vortex generating device 60, and as a result stable vortexes can be generated at the vortex generating device 60. Thus, the heat exchange performance of the first heat exchanger 30 can be improved.

It should be noted that also in the case where the sirocco fan 31C is employed as the first fan 31, the velocity of the flow of air which flows into the vortex generating device 60 varies in accordance with which part of the vortex generating device 60 the flow of air flows into. Therefore, also in the refrigeration cycle apparatus 100C as illustrated in Figs. 16 and 17, it is preferable that a larger number of vane structures 600 be provided at part of the vortex generating device 60 than at part thereof where the air velocity is higher than that at the above former part. By applying this configuration, vortexes equivalent to vortexes generated at part of the vortex generating device 60 where the air velocity is high can be generated at part of the vortex generating device 60 where the air velocity is low. Therefore, the heat exchange performance of the first heat exchanger 30 can be further improved.

Fig. 18 is a plan view illustrating a still another example of the configuration of the refrigeration cycle apparatus according to embodiment 4 of the present invention. Fig. 19 is a side view illustrating the still another configuration of the refrigeration cycle apparatus according to embodiment 4 of the present invention as illustrated in Fig. 18. It should be noted that outlined arrows in Figs. 18 and 19 indicate flow directions of air which is sent by the first fan 31. In Figs. 18 and 19, the refrigeration cycle apparatus according to embodiment 4 of the present invention is illustrated as a refrigeration cycle apparatus 100D.

The refrigeration cycle apparatus 100D as illustrated in Figs. 18 and 19 employs a turbofan 31D as the first fan 31. When the turbofan 31D is rotated, air is sucked in the direction of the rotational axis of the turbofan 31D. Further, in the turbofan 31D, air is blown out toward an outer periphery of the turbofan 31D. At this time, a flow of air at an outlet of the turbofan 31D is regulated comparatively.

Therefore, in the case where the turbofan 31D is employed as the first fan 31, it is preferable that the turbofan 31D be provided upstream of the vortex generating device 60 in the flow direction of air which is sent by the turbofan 31D. Therefore, in the refrigeration cycle apparatus 100D as illustrated in Figs. 18 and 19, the vortex generating device 60 is located to surround the outer periphery of the turbofan 31D. Furthermore, the first heat exchanger 30 is located to surround the outer periphery of the vortex generating device 60. Because of this location of the turbofan 31D, a comparatively regulated flow of air can be supplied to the vortex generating device 60 and as a result, stable vortexes can be generated at the vortex generating device 60. Thus, the heat exchange performance of the first heat exchanger 30 can be improved.

It should be noted that also in the case where the turbofan 31D is employed as the first fan 31, the velocity of the flow of air which flows into the vortex generating device 60 varies in accordance with which part of the vortex generating device 60 the flow of air flows into. Therefore, also in the refrigeration cycle apparatus 100D as illustrated in Figs. 18 and 19, it is preferable that a larger number of vane structures 600 be provided at part of the vortex generating device 60 than at part thereof where the air velocity is higher than that at the above former part. By applying this configuration, vortexes equivalent to vortexes generated at part of the vortex generating device 60 where the air velocity is high can be generated at part of the vortex generating device 60 where the air velocity is low. It is therefore possible to further improve the heat exchange performance of the first heat exchanger 30.

### Reference Signs List

10 compressor 20 flow switching device 30 first heat exchanger 30A first heat exchanger 30B first heat exchanger 30N first heat exchanger 31 first fan 31A propeller fan 31B cross-flow fan 31C sirocco fan 31D turbofan 32 motor for first fan 33 flat tube 33A first flat tube 33B second flat tube 33a fluid passage 34 first header 35 second header 40 expansion device 41 space 50 second heat exchanger 51 second fan 52 motor for second fan 60 vortex generating device 60A vortex generating device 60B vortex generating device 60N vortex generating device 70 refrigerant pipe 80 heat exchange unit 80A heat exchange portion 80B heat exchange portion 80N heat exchange portion 81 mounting surface 90 housing 91 air outlet 93 air inlet 94 air outlet 95 casing 100 refrigeration cycle apparatus 100A refrigeration cycle apparatus 100B refrigeration cycle apparatus 100C refrigeration cycle apparatus 100D refrigeration cycle apparatus 600 vane structure 601 first support body 601A first support portion 601B second support portion 602 vane body 602A first vane 602B second vane 602SY second vane body 603 second support body 702 vane body 802 vane body 802A first vane 802B second vane A1 vertical height A2 horizontal length CL opening Dr1 first direction Dr2 second direction E1 first end E2 second end E3 third end E4 fourth end E5 fifth end E6 sixth end P1 one end P2 other end S1 first surface S10 first opposite surface S2 second surface S20 second opposite surface WG vane body group L1 thickness of vortex generating device L2 width of flat tube in direction of major axis of cross section

## Claims

1. A vortex generating device (60, 60A, 60B, 60N) provided to face a heat exchanger (30, 30A, 30B, 30N) of a refrigeration cycle apparatus (100, 100A, 100B, 100C, 100D), the vortex generating device (60, 60A, 60B, 60N) comprising:
support bodies (601); and
vane bodies (602) provided on the support bodies (601),
wherein between the support bodies (601) and the vane bodies (602), respective first spaces are provided to allow air to flow therethrough,
wherein the vane bodies (602) each include one end (P1) located on one side in a flow direction of air, an other end (P2) located on an other side in the flow direction of air, and a surface (S1, S2) extending along the flow direction of air and from the one end (P1) to the other end (P2),
wherein the vane bodies (602) each include a first vane (602A, 802A) which is formed as a plate-shaped element, and a second vane (602B, 802B) which is formed as a plate-shaped element and paired with the first vane (602A, 802A),
the vortex generating device being **characterized in that** the first vane (602A, 802A) includes a first end (E1) associated with the one end (P1), a second end (E2) associated with the other end (P2), and a first surface (S1) associated with the surface extending along the flow direction of air, and
wherein the second vane (602B, 802B) includes a fourth end (E4) associated with the one end (P1), a fifth end (E5) associated with the other end (P2), and a second surface (S2) associated with the surface extending along the flow direction of air, and
wherein the first surface (S1) and the second surface (S2) are formed such that a first direction (Dr1) and a second direction (Dr2) intersect each other, where the first direction (Dr1) is a direction from the first end (E1) to the second end (E2) along the first surface (S1), and the second direction (Dr2) is a direction from the fourth end (E4) to the fifth end (E5) along the second surface (S2).

2. The vortex generating device (60, 60A, 60B, 60N) of claim 1,
wherein the support bodies (601) are each formed as a plate-shaped element.

3. The vortex generating device (60, 60A, 60B, 60N) of claim 1 or 2,
wherein the support bodies (601) each include:
a first support portion (601A); and
a second support portion (601B) spaced from the first support portion (601A) by a predetermined first distance and located to face the first support portion (601A),
wherein the vane bodies (602) each include:
a first vane (602A, 802A) located between the first support portion (601A) and the second support portion (601B); and
a second vane (602B, 802B) located between the first support portion (601A) and the second support portion (601B) and paired with the first vane (602A, 802A)

4. A refrigeration cycle apparatus (100, 100A, 100B, 100C, 100D) comprising:
a first heat exchanger (30) comprising a plurality of heat transfer tubes (33) through which refrigerant flows; and
the vortex generating device (60, 60A, 60B, 60N) of any one of claims 1 to 3,
wherein the vortex generating device (60, 60A, 60B, 60N) is provided to face the first heat exchanger (30).

5. The refrigeration cycle apparatus (100, 100A, 100B, 100C, 100D) of claim 4,
wherein each of the plurality of heat transfer tubes (33) is linearly shaped,
wherein the plurality of heat transfer tubes (33) are arranged in a predetermined arrangement direction, and
wherein a plurality of the vane bodies (602) are arranged in an axial direction of each of the heat transfer tubes (33) and in the arrangement direction.

6. The refrigeration cycle apparatus (100, 100A, 100B, 100C, 100D) of claim 4,
wherein the plurality of heat transfer tubes (33) include:
linear first heat transfer tubes (33A); and
linear second heat transfer tubes (33B) provided parallel to the first heat transfer tubes (33A), each of the second heat transfer tubes (33B) being spaced from an associated one of the first heat transfer tubes (33A) by a predetermined second distance, and located to face the associated first heat transfer tube (33A), and
wherein each of the vane bodies (602) of the vortex generating device (60, 60A, 60B, 60N) is provided within space corresponding to space between an associated one of the first heat transfer tubes (33A) and an associated one of the second heat transfer tubes (33B).

7. The refrigeration cycle apparatus (100, 100A, 100B, 100C, 100D) of any one of claims 4 to 6,
wherein the vane bodies (602) include:
first vane bodies (602); and
second vane bodies (602SY) shaped such that each of the first vane bodies (602) and an associated one of the second vane bodies (602SY) are symmetrical, and
wherein in the vortex generating device (60, 60A, 60B, 60N), the first vane bodies (602) and the second vane bodies (602SY) are disposed in a staggered pattern.

8. The refrigeration cycle apparatus (100, 100A, 100B, 100C, 100D) of any one of claims 4 to 7, wherein the vortex generating device (60, 60A, 60B, 60N) is separated from the first heat exchanger (30) by a second space.

9. The refrigeration cycle apparatus (100, 100A, 100B, 100C, 100D) of any one of claims 4 to 8,
wherein each of the heat transfer tubes (33, 33A, 33B) is a flat tube having a cross section which is longer in a direction of a major axis of the cross section than in a direction of a minor axis of the cross section, and
wherein the direction of the major axis of the cross section is parallel to a flow direction of air.

10. The refrigeration cycle apparatus (100, 100A, 100B, 100C, 100D) of any one of claims 4 to 9, wherein a fan (31) configured to send air to the first heat exchanger (30) is provided upstream or downstream of the first heat exchanger (30).

11. The refrigeration cycle apparatus (100, 100A, 100B, 100C, 100D) of any one of claims 4 to 10, further comprising:
a refrigerant circuit in which a compressor (10), the first heat exchanger (30), an expansion device (40) and a second heat exchanger (50) are connected by refrigerant pipes (70),
wherein the first heat exchanger (30) functions as an evaporator.

## Patentansprüche

1. Wirbelerzeugungseinrichtung (60, 60A, 60B, 60N), die vorgesehen ist, um einem Wärmetauscher (30, 30A, 30B, 30N) einer Kältekreislaufvorrichtung (100, 100A, 100B, 100C, 100D) zugewandt zu sein, wobei die Wirbelerzeugungseinrichtung (60, 60A, 60B, 60N) umfasst:
Stützkörper (601); und
Leitflügelkörper (602), die auf den Stützkörpern (601) vorgesehen sind, wobei zwischen den Stützkörpern (601) und den Leitflügelkörpern (602) jeweils erste Zwischenräume vorgesehen sind, um Luft durch diese hindurchströmen zu lassen,
wobei die Leitflügelkörper (602) jeweils ein Ende (P1), das auf einer Seite in einer Strömungsrichtung von Luft angeordnet ist, ein anderes Ende (P2), das auf einer anderen Seite in der Strömungsrichtung von Luft angeordnet ist, und eine Oberfläche (S1, S2), die sich entlang der Strömungsrichtung von Luft und von dem einen Ende (P1) zu dem anderen Ende (P2) erstreckt, umfassen,
wobei die Leitflügelkörper (602) jeweils einen ersten Leitflügel (602A, 802A), der als ein plattenförmiges Element ausgebildet ist, und einen zweiten Leitflügel (602B, 802B), der als ein plattenförmiges E!e-ment ausgebildet und mit dem ersten Leitflügel (602A, 802A) gepaart ist, umfassen,
wobei die Wirbelerzeugungseinrichtung **dadurch gekennzeichnet ist, dass** der erste Leitflügel (602A, 802A) ein erstes Ende (E1), das dem einen Ende (P1) zugeordnet ist, ein zweites Ende (E2), das dem anderen Ende (P2) zugeordnet ist, und eine erste Oberfläche (S1), die der Oberfläche zugeordnet ist, die sich entlang der Strömungsrichtung von Luft erstreckt, aufweist, und wobei der zweite Leitflügel (602B, 802B) ein viertes Ende (E4), das dem einen Ende (P1) zugeordnet ist, ein fünftes Ende (E5), das dem anderen Ende (P2) zugeordnet ist, und eine zweite Oberfläche (S2), die der Oberfläche zugeordnet ist, die sich entlang der Strömungsrichtung von Luft erstreckt, aufweist, und
wobei die erste Oberfläche (S1) und die zweite Oberfläche (S2) ausgebildet sind, so dass eine erste Richtung (Dr1) und eine zweite Richtung (Dr2) einander schneiden, wobei die erste Richtung (Dr1) eine Richtung ist von dem ersten Ende (E1) zu dem zweiten Ende (E2) entlang der ersten Oberfläche (S1), und die zweite Richtung (Dr2) eine Richtung ist von dem vierten Ende (E4) zu dem fünften Ende (E5) entlang der zweiten Oberfläche (S2).

2. Wirbelerzeugungseinrichtung (60, 60A, 60B, 60N) nach Anspruch 1,
wobei die Stützkörper (601) jeweils als ein plattenförmiges Element ausgebildet sind.

3. Wirbelerzeugungseinrichtung (60, 60A, 60B, 60N) nach Anspruch 1 oder 2,
wobei die Stützkörper (601) jeweils aufweisen:
einen ersten Stützabschnitt (601A); und
einen zweiten Stützabschnitt (601B), der von dem ersten Stützabschnitt (601A) um einen vorherbestimmten ersten Abstand beabstandet ist und angeordnet ist, um dem ersten Stützabschnitt (601A) zugewandt zu sein,
wobei die Stützkörper (602) jeweils aufweisen:
einen ersten Leitflügel (602A, 802A), der zwischen dem ersten Stützabschnitt (601A) und dem zweiten Stützabschnitt (601B) angeordnet ist; und
einen zweiten Leitflügel (602B, 802B), der zwischen dem ersten Stützabschnitt (601A) und dem zweiten Stützabschnitt (601B) angeordnet ist und mit dem ersten Leitflügel (602A, 802A) gepaart ist.

4. Kältekreislaufvorrichtung (100, 100A, 100B, 100C, 100D), umfassend:
einem ersten Wärmetauscher (30), umfassend eine Vielzahl von Wärmeübertragungsleitungen (33), durch die Kältemittel strömt; und
die Wirbelerzeugungseinrichtung (60, 60A, 60B, 60N) nach einem der Ansprüche 1 bis 3, wobei die Wirbelerzeugungseinrichtung (60, 60A, 60B, 60N) vorgesehen ist, um dem ersten Wärmetauscher (30) zugewandt zu sein.

5. Kältekreislaufvorrichtung (100, 100A, 100B, 100C, 100D) nach Anspruch 4, wobei jede der Vielzahl von Wärmeübertragungsleitungen (33) linear geformt ist,
wobei die Vielzahl von Wärmeübertragungsleitungen (33) in einer vorherbestimmten Anordnungsrichtung angeordnet sind, und
wobei eine Vielzahl der Leitflügelkörper (602) in einer axialen Richtung jeder der Wärmeübertragungsleitungen (33) und in der Anordnungsrichtung angeordnet sind.

6. Kältekreislaufvorrichtung (100, 100A, 100B, 100C, 100D) nach Anspruch 4,
wobei die Vielzahl von Wärmeübertragungsleitungen (33) aufweisen:
lineare erste Wärmeübertragungsleitungen (33A); und
lineare zweite Wärmeübertragungsleitungen (33B), die parallel zu den ersten Wärmeübertragungsleitungen (33A) vorgesehen sind, wobei jede der zweiten Wärmeübertragungsleitungen (33B) von einem zugeordneten der ersten Wärmeübertragungsleitungen (33A) um einen vorherbestimmten zweiten Abstand beabstandet ist und angeordnet ist, um dem zugeordneten ersten Wärmeübertragungsrohr (33A) zugewandt zu sein, und
wobei jeder der Leitflügelkörper (602) der Wirbelerzeugungseinrichtung (60, 60A, 60B, 60N) in einem Zwischenraum vorgesehen ist, der dem Zwischenraum zwischen einem zugeordneten der ersten Wärmeübertragungsleitungen (33A) und einem zugeordneten der zweiten Wärmeübertragungsleitungen (33B) entspricht.

7. Kältekreislaufvorrichtung (100, 100A, 100B, 100C, 100D) nach einem der Ansprüche 4 bis 6,
wobei die Leitflügelkörper (602) aufweisen:
erste Leitflügelkörper (602); und
zweite Leitflügelkörper (602SY), die so geformt sind, dass jeder der ersten Leitflügelkörper (602) und ein zugeordneter der zweiten Leitflügelkörper (602SY) symmetrisch sind, und
wobei in der Wirbelerzeugungseinrichtung (60, 60A, 60B, 60N) die ersten Leitflügelkörper (602) und die zweiten Leitflügelkörper (602SY) in einem versetzten Muster angeordnet sind.

8. Kältekreislaufvorrichtung (100, 100A, 100B, 100C, 100D) nach einem der Ansprüche 4 bis 7, wobei die Wirbelerzeugungseinrichtung (60, 60A, 60B, 60N) von dem ersten Wärmetauscher (30) durch einen zweiten Zwischenraum getrennt ist.

9. Kältekreislaufvorrichtung (100, 100A, 100B, 100C, 100D) nach einem der Ansprüche 4 bis 8,
wobei jede der Wärmeübertragungsleitungen (33, 33A, 33B) ein Flachrohr mit einem Querschnitt ist, der in einer Richtung einer Hauptachse des Querschnitts länger ist als in einer Richtung einer Nebenachse des Querschnitts, und
wobei die Richtung der Hauptachse des Querschnitts parallel zu einer Strömungsrichtung von Luft ist.

10. Kältekreislaufvorrichtung (100, 100A, 100B, 100C, 100D) nach einem der Ansprüche 4 bis 9, wobei ein Lüfter (31), der eingerichtet ist, Luft zum ersten Wärmetauscher (30) zu senden, stromaufwärts oder stromabwärts des ersten Wärmetauschers (30) vorgesehen ist.

11. Kältekreislaufvorrichtung (100, 100A, 100B, 100C, 100D) nach einem der Ansprüche 4 bis 10, ferner umfassend:
einen Kältemittelkreislauf (A), in dem ein Verdichter (10), ein erster Wärmetauscher (30), eine Expansionseinrichtung (40) und ein zweiter Wärmetauscher (50) durch Kältemittelleitungen (70) parallel verbunden sind,
wobei der erste Wärmetauscher (30) als ein Verdampfer funktioniert.

## Revendications

1. Dispositif de génération de tourbillon (60, 60A, 60B, 60N) prévu pour faire face à un échangeur de chaleur (30, 30A, 30B, 30N) d'un appareil à cycle de réfrigération (100, 100A, 100B, 100C, 100D), le dispositif de génération de tourbillon (60, 60A, 60B, 60N) comprenant :
des corps de support (601) ; et
des corps d'aube (602) prévus sur les corps de support (601),
dans lequel entre les corps de support (601) et les corps d'aube (602), sont prévus des premiers espaces respectifs pour permettre à de l'air de s'écouler à travers,
dans lequel les corps d'aube (602) incluent chacun une extrémité (P1) située sur un côté dans une direction d'écoulement de l'air, une autre extrémité (P2) située sur un autre côté dans la direction d'écoulement de l'air, et une surface (S1, S2) s'étendant le long de la direction d'écoulement de l'air et de la première extrémité (P1) à l'autre extrémité (P2),
dans lequel les corps d'aube (602) incluent chacun une première aube (602A, 802A) qui est formée comme un élément en forme de plaque, et une seconde aube (602B, 802B) qui est formée comme un élément en forme de plaque et appariée avec la première aube (602A, 802A),
le dispositif de génération de tourbillon étant **caractérisé en ce que**
la première aube (602A, 802A) inclut une première extrémité (E1) associée à la première extrémité (P1), une deuxième extrémité (E2) associée à l'autre extrémité (P2), et une première surface (S1) associée à la surface s'étendant le long de la direction d'écoulement de l'air, et
dans lequel la seconde aube (602B, 802B) inclut une quatrième extrémité (E4) associée à la première extrémité (P1), une cinquième extrémité (E5) associée à l'autre extrémité (P2), et une seconde surface (S2) associée à la surface s'étendant le long de la direction d'écoulement de l'air, et
dans lequel la première surface (S1) et la seconde surface (S2) sont formées de telle sorte qu'une première direction (Dr1) et qu'une seconde direction (Dr2) se croisent, où la première direction (Dr1) est une direction allant de la première extrémité (E1) à la deuxième extrémité (E2) le long de la première surface (S1), et la seconde direction (Dr2) est une direction allant de la quatrième extrémité (E4) à la cinquième extrémité (E5) le long de la seconde surface (S2).

2. Dispositif de génération de tourbillon (60, 60A, 60B, 60N) selon la revendication 1,
dans lequel les corps de support (601) sont chacun formés comme un élément en forme de plaque.

3. Dispositif de génération de tourbillon (60, 60A, 60B, 60N) selon la revendication 1 ou 2,
dans lequel les corps de support (601) incluent chacun :
une première partie de support (601A) ; et
une seconde partie de support (601B) espacée de la première partie de support (601A) d'une première distance prédéterminée et située pour faire face à la première partie de support (601A),
dans lequel les corps d'aube (602) incluent chacun :
une première aube (602A, 802A) située entre la première partie de support (601A) et la seconde partie de support (601B) ; et
une seconde aube (602B, 802B) située entre la première partie de support (601A) et la seconde partie de support (601B) et appariée avec la première aube (602A, 802A).

4. Appareil à cycle de réfrigération (100, 100A, 100B, 100C, 100D) comprenant :
un premier échangeur de chaleur (30) comprenant une pluralité de tubes de transfert de chaleur (33) à travers lesquels s'écoule du réfrigérant ; et
le dispositif de génération de tourbillon (60, 60A, 60B, 60N) selon l'une quelconque des revendications 1 à 3,
dans lequel le dispositif de génération de tourbillon (60, 60A, 60B, 60N) est prévu pour faire face au premier échangeur de chaleur (30).

5. Appareil à cycle de réfrigération (100, 100A, 100B, 100C, 100D) selon la revendication 4,
dans lequel chacun de la pluralité de tubes de transfert de chaleur (33) est formé linéairement,
dans lequel la pluralité de tubes de transfert de chaleur (33) sont agencés dans une direction d'agencement prédéterminée, et
dans lequel une pluralité de corps d'aube (602) sont agencés dans une direction axiale de chacun des tubes de transfert de chaleur (33) et dans la direction d'agencement.

6. Appareil à cycle de réfrigération (100, 100A, 100B, 100C, 100D) selon la revendication 4,
dans lequel la pluralité de tubes de transfert de chaleur (33) inclut :
des premier tubes de transfert de chaleur linéaires (33A) ; et
des seconds tubes de transfert de chaleur linéaires (33B) prévus parallèlement aux premiers tubes de transfert de chaleur (33A), chacun des seconds tubes de transfert de chaleur (33B) étant espacé d'un tube associé des premiers tubes de transfert de chaleur (33A) d'une seconde distance prédéterminée, et situé pour faire face au premier tube de transfert de chaleur (33A) associé, et
dans lequel chacun des corps d'aube (602) du dispositif de génération de tourbillon (60, 60A, 60B, 60N) est prévu à l'intérieur d'un espace correspondant à l'espace entre un tube associé des premiers tubes de transfert de chaleur (33A) et un tube associé des seconds tubes de transfert de chaleur (33B).

7. Appareil à cycle de réfrigération (100, 100A, 100B, 100C, 100D) selon l'une quelconque des revendications 4 à 6,
dans lequel les corps d'aube (602) incluent :
des premiers corps d'aube (602) ; et
des seconds corps d'aube (602SY) formés de telle sorte que chacun des premiers corps d'aube (602) et un corps associé des seconds corps d'aube (602SY) sont symétriques, et
dans lequel dans le dispositif de génération de tourbillon (60, 60A, 60B, 60N), les premiers corps d'aube (602) et les seconds corps d'aube (602SY) sont disposés en quinconce.

8. Appareil à cycle de réfrigération (100, 100A, 100B, 100C, 100D) selon l'une quelconque des revendications 4 à 7, dans lequel le dispositif de génération de tourbillon (60, 60A, 60B, 60N) est séparé du premier échangeur de chaleur (30) par un second espace.

9. Appareil à cycle de réfrigération (100, 100A, 100B, 100C, 100D) selon l'une quelconque des revendications 4 à 8,
dans lequel chacun des tubes de transfert de chaleur (33, 33A, 33B) est un tube plat ayant une section transversale qui est plus longue dans une direction d'un axe principal de la section transversale que dans une direction d'un axe secondaire de la section transversale, et
dans lequel la direction de l'axe principal de la section transversale est parallèle à une direction d'écoulement de l'air.

10. Appareil à cycle de réfrigération (100, 100A, 100B, 100C, 100D) selon l'une quelconque des revendications 4 à 9, dans lequel un ventilateur (31) configuré pour envoyer de l'air vers le premier échangeur de chaleur (30) est prévu en amont ou en aval du premier échangeur de chaleur (30).

11. Appareil à cycle de réfrigération (100, 100A, 100B, 100C, 100D) selon l'une quelconque des revendications 4 à 10, comprenant en outre :
un circuit réfrigérant dans lequel un compresseur (10), le premier échangeur de chaleur (30), un dispositif de détente (40) et un second échangeur de chaleur (50) sont raccordés par des tuyaux de réfrigérant (70),
dans lequel le premier échangeur de chaleur (30) fonctionne comme un évaporateur.
